# EUROPÄISCHE PATENTSCHRIFT

(11) **EP 0 524 348 B1**
(45) Veröffentlichungstag und Bekanntmachung des Hinweises auf die Patenterteilung: **01.12.1999**
(21) Anmeldenummer: 91122162.0
(22) Anmeldetag: 23.12.1991
(51) Int. Cl.: G01N 21/88, G01N 21/47

(54) **Einrichtung für Oberflächeninspektionen**
Surface inspection apparatus
Appareil de contrôle de surface

(30) Priorität: 20.07.1991 CH 215491
(43) Veröffentlichungstag der Anmeldung: 27.01.1993
(73) Patentinhaber: TENCOR INSTRUMENTS, Mountain View, CA 94043 (US)
(72) Erfinder: Malin, Cosmas, Dipl.-Ing., FL-9493 Mauren (LI); Steigmeier, Edgar F., Dr. Ing., CH-8908 Hedingen (CH); Nesensohn, Thomas, A-6832 Batschuns (AT); Sawatzki, Harry L., FL-9494 Schaan (LI); Auderset, Heinrich, CH-8914 Aeugst A.A. (CH)
(74) Vertreter: Fiener, Josef

(56) Entgegenhaltungen:
- EP-A- 0 290 228
- EP-A- 0 398 781
- EP-A- 0 447 848
- DE-A- 3 814 606
- US-A- 4 314 763
- RCA REVIEW Bd. 44, Nr. 1, März 1983, PRINCETON US Seiten 5 - 18 E.F. STEIGMEIER ET AL 'Optical scanner for dust and defect detection'
- PATENT ABSTRACTS OF JAPAN vol. 10, no. 327 (P-513)7. November 1986 & JP-A-61 133 843 ( HITACHI ELECTRONICS ) 21. Juni 1986
- OPTICS AND LASER TECHNOLOGY Bd. 12, Nr. 6, Dezember 1980, HAYWARDS HEATH GB Seiten 317 - 320 'Automatic inspection of silicon wafers'
- PATENT ABSTRACTS OF JAPAN vol. 12, no. 403 (E-674)26. Oktober 1988 & JP-A-63 143 830 ( HITACHI ELECTRONICS ) 16. Juni 1988
- PATENT ABSTRACTS OF JAPAN vol. 14, no. 345 (P-1083)26. Juli 1990 & JP-A-02 123 539 ( HITACHI ELECTRONICS ) 11. Mai 1990

## Beschreibung

Die Erfindung betrifft eine Einrichtung für Oberflächeninspektionen, insbesondere zur hochempfindlichen und richtungsunabhängigen Messung von punkt-, linien- und flächenförmigen Defekten einer Oberfläche, mit einer einen Beleuchtungsstrahl erzeugenden Lichtquelle, mit einem Objektiv und mit einer Auflagescheibe, auf der das zu inspizierende Objekt angeordnet ist, wobei der Beleuchtungsstrahl durch das Objektiv senkrecht auf die Oberfläche des Objektes gerichtet ist und die Auflagescheibe auf einem Antrieb befestigt ist, der eine aus einer Rotation und einer Translation zusammengesetzte Bewegung ausführt, so dass die Oberfläche des Objektes mittels des Beleuchtungsstrahles spiralförmig abgetastet wird, und wobei ein Photodetektor vorgesehen ist, auf welchen das von der Oberfläche des Objektes abgestrahlte und im Objektiv gesammelte Licht gerichtet ist, und dessen Ausgang mit einem Verstärker in Verbindung steht.

Mit derartigen Einrichtungen können beispielsweise in der Mikroelektronik Oberflächen von Wafern, Magnetspeichermedien und/oder Substraten für optische Anwendungen zerstörungsfrei auf etwa vorhandene Defekte kontrolliert bzw. inspiziert werden.

Mit der **US-PS 4,314,763** ist eine Einrichtung gemäss obenstehenden Merkmalen bekannt geworden, bei welcher ein Beleuchtungsstrahl einer Lichtquelle in Form eines Lasers über zwei Prismen und ein Objektiv senkrecht auf die Oberfläche eines zu kontrollierenden bzw. zu inspizierenden Objektes projiziert wird. Das Objekt ist auf einer Unterlage befestigt, die mit einer Welle eines Stirnradantriebes verbunden ist. Der Stirnradantrieb ist auf einer Platte montiert, welche mittels eines Motors geradlinig verschoben werden kann. Bei einer Kontrolle der Oberfläche eines Objektes überlagert sich die Rotationsbewegung der Unterlage und die Translationsbewegung der Platte derart, dass bei feststehendem optischem System die Oberfläche des zu inspizierenden Objektes mittels des Beleuchtungsstrahles spiralförmig abgetastet wird. Die von der Oberfläche gestreuten und gebeugten Strahlen werden über das Objektiv auf einen Photodetektor gerichtet, welcher bei Beleuchtung eines Defektes ein elektrisches Signal erzeugt, das einem Verstärker zugeführt wird. Dem Verstärker ist ein Zähler und ein Bildschirm nachgeschaltet, wobei im Zähler die der Anzahl der Defekte entsprechende Anzahl der verstärkten elektrischen Signale gezählt werden, und auf dem Bildschirm deren räumliche Verteilung dargestellt wird.

Da derartige Einrichtungen eine hohe Empfindlichkeit aufweisen, die unter anderem auf die Tatsache zurückzuführen ist, dass durch die statische Optik lediglich das Streulicht der kleinen beleuchteten Fläche im Photodetektor abgebildet werden muss, können neben kugeligen Partikeln auch linien- und flächenförmige Defekte bis zu einer Grössenordnung von ungefähr 1 µm festgestellt und erkannt werden. Aufgrund guter Abbildungseigenschaften, die durch ein optisch hochwertiges, korrigiertes Objektiv erreicht werden und wegen des Umstandes, dass das Streulicht der beleuchteten Fläche um einen Winkel von 360° um die optische Achse aufgefangen und im Photodetektor abgebildet wird, erreichen solche Einrichtungen eine hohe Effizienz in der Streulichterfassung.

Eine ähnliche Einrichtung, aber mit elliptischem Licht fleck, ist aus dem Artikel "Optical Scanner for Dust and Defect Detection" von E.F. Steigmeier und H. Auderset in RCA REVIEW, Bd. 44, Nr. 1, März 1983 bekannt.

Hierbei wird jedoch die Tatsache, dass Oberflächen mit zunehmender Perfektion hergestellt werden müssen und damit in erhöhtem Masse zunehmenden Anforderungen an die Qualität ausgesetzt sind, ausser Acht gelassen.
In der Praxis bedeutet das, dass die Streuzentren von flächigen Defekten solcher zu inspizierenden Oberflächen immer kleinere Unregelmässigkeiten aufweisen und damit eine zunehmende Ausprägung der Vorwärts streuung aufweisen was somit durch derartig ausgebildete Inspektionseinrichtungen nicht berücksichtigt werden kann.

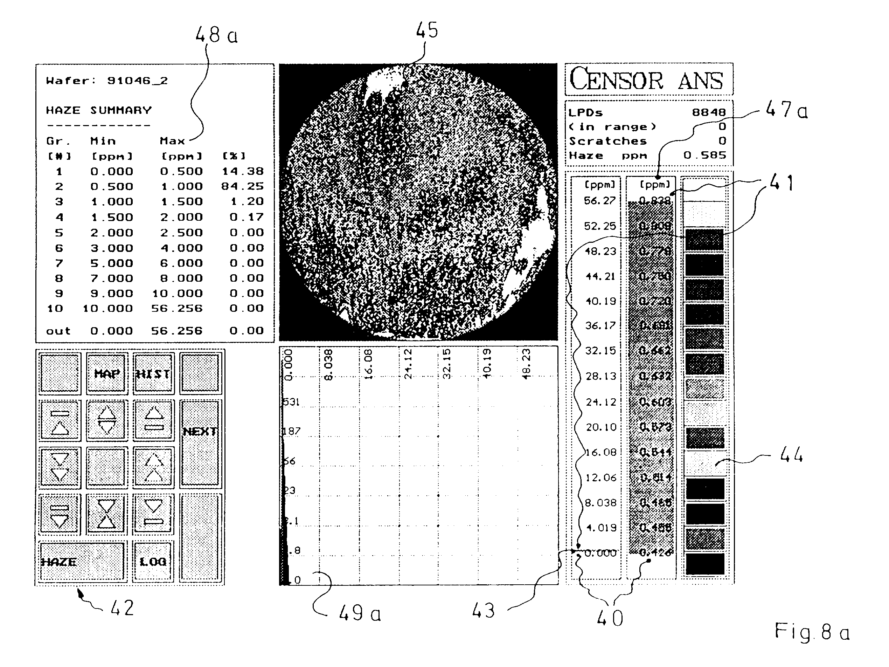

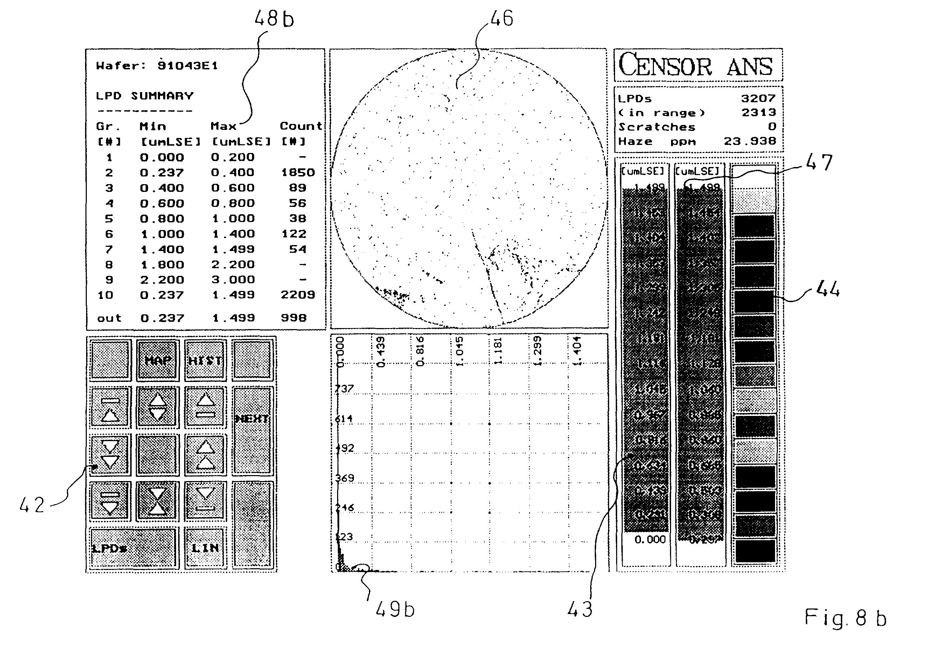

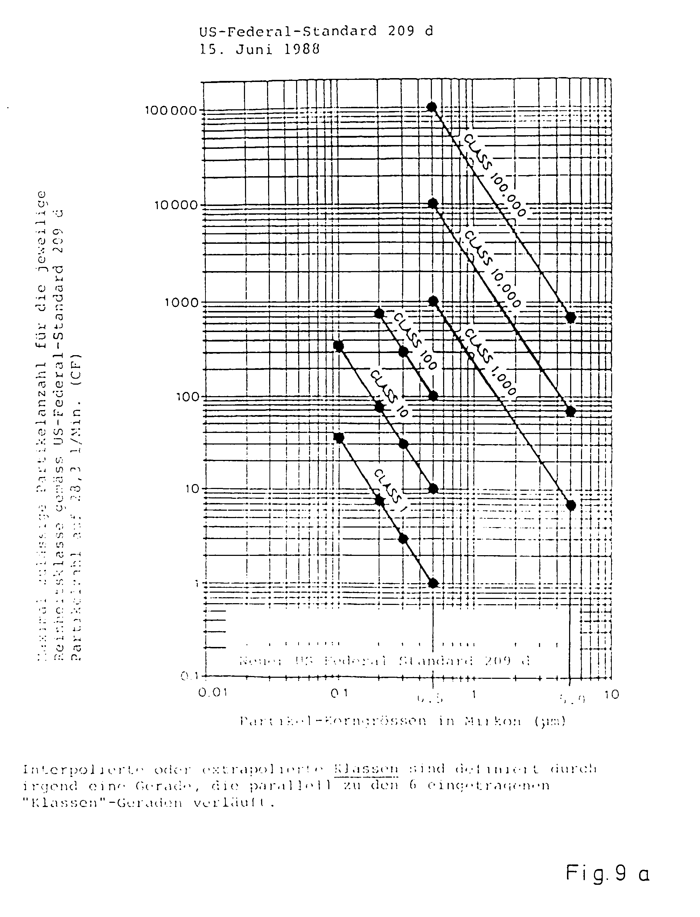

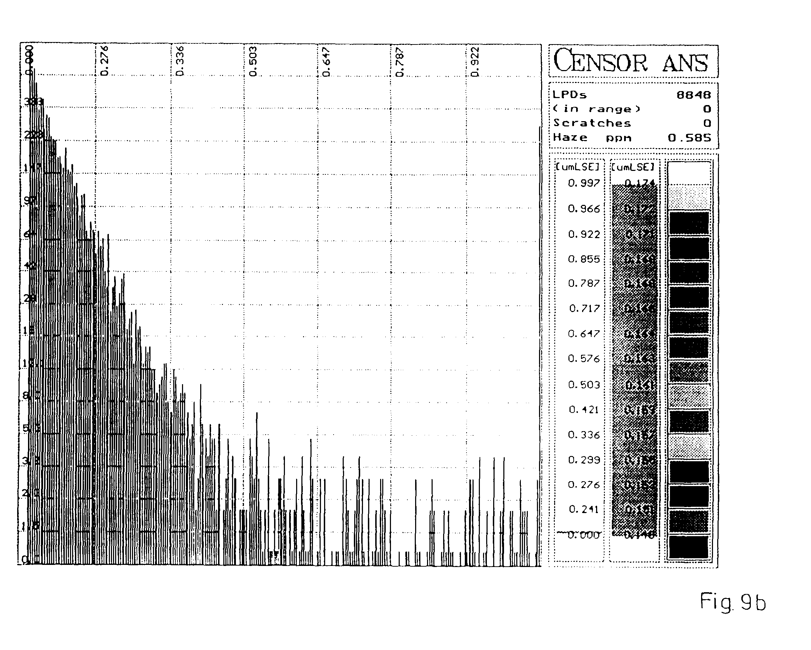

Weiterhin ist dem Umstand nicht Rechnung getragen, dass die Anzahl der Defekte mit abnehmender physikalischer Grösse zunimmt **(Fig. 9b).** Analog zu der bekannten Verteilung von Partikeln in Gasen (**Fig. 9a**), ist bei Defekten auf Oberflächen ein ebenfalls logarithmischer Verlauf der Zunahme der Anzahl von Defekten bei abnehmender Defektgrösse festgestellt worden. Mit grösser werdender Empfindlichkeit des Messsystems werden die erkennbaren Einzeldefekte (**siehe LPD's, Fig. 8a**) somit immer dichter und schmelzen schliesslich wegen der limitierten Ortsauflösung des Messsystems zu linienförmigen Defektreihen (**Fig. 8b**) oder flächenförmigen Defektzonen (**siehe Haze, Fig. 8a**) zusammen.

Der Erfindung liegt daher die Aufgabe zugrunde eine Einrichtung zu schaffen, die gegenüber dem vorstehend genannten Stand der Technik eine höhere Messempfindlichkeit zulässt und verbesserte Abbildungseigenschaften aufweist, wobei die sich aus zunehmender Verkleinerung der Dimensionen der relevanten Streuzentren ergebenden, Auswirkungen berücksichtigt werden sollen, und wobei die aufgrund der notwendigen höheren Messempfindlichkeit sich ergebende zunehmende Anzahl und Dichte der punktförmigen Defekte erfassbar und entsprechend darstellbar sein soll.

Diese Aufgabe wird durch die im Patentanspruch 1 gekennzeichnete Erfindung gelöst. Hierbei ist im Strahlengang zwischen Lichtquelle und Objektiv ein astigmatisches Linsensystem angeordnet. Das Linsensystem erzeugt ein zigarrenförmiges Zwischenbild, das durch das Objektiv auf die Oberfläche abgebildet wird. Eine im Strahlengang zwischen dem Linsensystem und dem Objektiv angeordnete Dunkelfeldstop-Baugruppe mit einer einstellbaren Dunkelfeldumlenkung, richtet den Beleuchtungsstrahl nach der Umlenkung exakt zentrisch und im rechten Winkel durch das Objektiv auf das zu inspizierende Objekt.

Zwecks Verarbeitung der Messdaten ist eine Auswerteelektronik vorgesehen, die eingangsseitig mit dem, dem Photodetektor nachgeschalteten Verstärker verbunden ist. Die Auswerteelektronik zerlegt das vom Verstärker erzeugte Ausgangssignal in Messwerte, die von punktförmigen, linienförmigen und flächenförmigen Defekten der Oberfläche des inspizierenden bzw. kontrollierenden Objektes herrühren.

Eine Anordnung zur Ermittlung der jeweiligen momentanen Abtastposition des Beleuchtungsstrahles auf der Oberfläche des Objektes ist mit Peripheriegeräten verbunden, mittels welchen die Gesamtheit aller Messwerte einer Messung in den zugeordneten Abtastpositionen dargestellt werden kann.

Mit der Erfindung werden die nachfolgend beschriebenen Vorteile erzielt:
- Die Einrichtung gewährleistet absolute Rotationssymmetrie bezüglich der optischen Achse von Beleuchtung und Streulicht-Sammeloptik, so dass Defekte bzw. Oberflächen mit Defekten, deren physikalische Ausdehnung eine bevorzugte Richtung aufweisen, richtungsunabhängig dargestellt werden können.
- Mit der Einrichtung können Streulichtanteile von weniger als **0,01 ppm** aufgelöst werden.
- Es können alle gängigen Defekte, wie punktförmige Defekte (Light point defects **LPD's**), linienförmige Defects (Line defects) und Flächendefekte (**Haze**) auf Oberflächen und in oberflächennahen Regionen zerstörungsfrei und schnell erkannt, lokalisiert und quantifiziert werden. Beispielsweise ist der Nachweis von Partikeln (**LPD's**) von weniger als **0,1** µm Grösse möglich.
- Oberflächen von beispielsweise Wafern, Substraten für optische Anwendungen oder Magnetspeichermedien können schnell - beispielsweise in 10-20 Sekunden- mit nur einer Messung ganzflächig auf alle gängigen Defekte inspiziert werden.
- Die Auswerteelektronik gestattet Defekte in beliebiger Dichte aufzunehmen und als Flächendefekte (**Haze**) darzustellen.
- Im weiteren wird durch die Kopplung der Messwerte-Einlese-Zyklen mit dem Rotationsimpulsgeber der mit der Achse des Rotationsmotors verbunden ist, eine Unabhängigkeit zwischen der Datenaquisition und der Rotationsgeschwindigkeit erreicht.
- Die Reduktion der Impulse pro Umdrehung in Abhängigkeit von der radialen Position gegen das Zentrum hin, verringert den für die Analyse und Speicherung der Messwerte benötigten Speicherbedarf.
- Der ferner durch das astigmatische Linsensystem erzeugte astigmatische Beleuchtungsstrahl überstreicht beim Abtasten eine grössere Fläche und erlaubt somit einen grösseren Vorschub zwischen zwei sich folgenden Umdrehungen.
- Die insbesondere für die Messung von Flächendefekten erforderliche Messempfindlichkeitseinstellung kann durch die entsprechende Elektronik automatisch durchgeführt werden.
- Die Darstellung der Defekte erfolgt über leicht interpretierbare Farbgraphiken.
- Die aufwendigen Darstellungen -insbesondere der Flächendefekte- können nach erfolgter Messung durch die automatische Skalierung, ohne Eingriffe des Operators ausgegeben werden.
- Durch die automatische Vororientierung der Substrate werden die Messresultate stets in der gewünschten Orientierung ausgegeben. Zugleich können somit die Substrate ohne zusätzliche Vororientierungs-Vorrichtungen in der gewünschten Orientierung nach der Messung abgelegt werden.

Im folgenden wird die Erfindung anhand mehrerer in den einzelnen Figuren dargestellter Ausführungsbeispiele näher erläutert. Es zeigen:
- **Fig. 1**: eine schematische Darstellung der erfindungsgemässen Einrichtung anhand eines ersten Ausführungsbeispiels,
- **Fig. 2a 2b 2c**: vereinfachte Darstellungen der StreulichtintensitätsVerteilung einer Oberfläche mit hohem Hazepegel (**2a**) und mit niedrigem Hazepegel (**2b**) sowie einer hypothetischen Oberfläche ohne Defekte und reiner Reflexion (**2c**),
- **Fig. 3**: ein Ausführungsbeispiel für eine Dunkelfeldstop-Baugruppe mit getrennter Einstellmöglichkeit der Dunkelfeldumlenkung und dem Dunkelfeldstop,
- **Fig. 4a 4b 4c**: drei Ausführungsbeispiele für eine Dunkelfeldstop-Baugruppe der Einrichtung des ersten Ausführungsbeispiels gemäss **Fig. 1**,
- **Fig. 5a**: ein Blockschema einer Auswerteelektronik der Einrichtung des ersten Ausführungsbeispiels gemäss **Fig. 1**,
- **Fig. 5b**: ein weiteres Ausführungsbeispiel der Auswerteelektronik gemäss **Fig. 5a**,
- **Fig. 6a 6b**: einen typischen Signalverlauf eines Photodetektors der Einrichtung aus dem ersten Ausführungsbeispiel gemäss Fig. 1 am Rand eines zu inspizierenden Objektes (**Fig. 6a**) und im Zentrum des Objektes **(Fig. 6b),**
- **Fig. 7a**: eine schematische Darstellung eines Teiles der ObjektOberfläche und einer Einteilung in imaginäre Messflächen,
- **Fig. 7b**: eine schematische Darstellung einer Adressentabelle für die den imaginären Messflächen gemäss **Fig. 7a** zugeordneten Adressen,
- **Fig. 7c**: einen Ausschnitt der für die Darstellung der auf die Messflächen gemäss **Fig. 7a** bezogenen Messergebniss benötigten Pixelfläche,
- **Fig. 8a 8b**: typisches Messbild von sehr kleinen dichten, zu Flächen zusammengeschmolzenen Defekten ( siehe **Haze, 8a**) und von grossen punktförmigen Defekten (siehe **LPD's**) und linienförmigen Defekten (**8b**), und
- **Fig. 9a 9b**: einen typischen Verlauf der Häufigkeit von Partikeln bzw. Defekten in Abhängigkeit von deren physikalischen Dimensionen in Gasen (**9a**) und auf Oberflächen (**9b**).

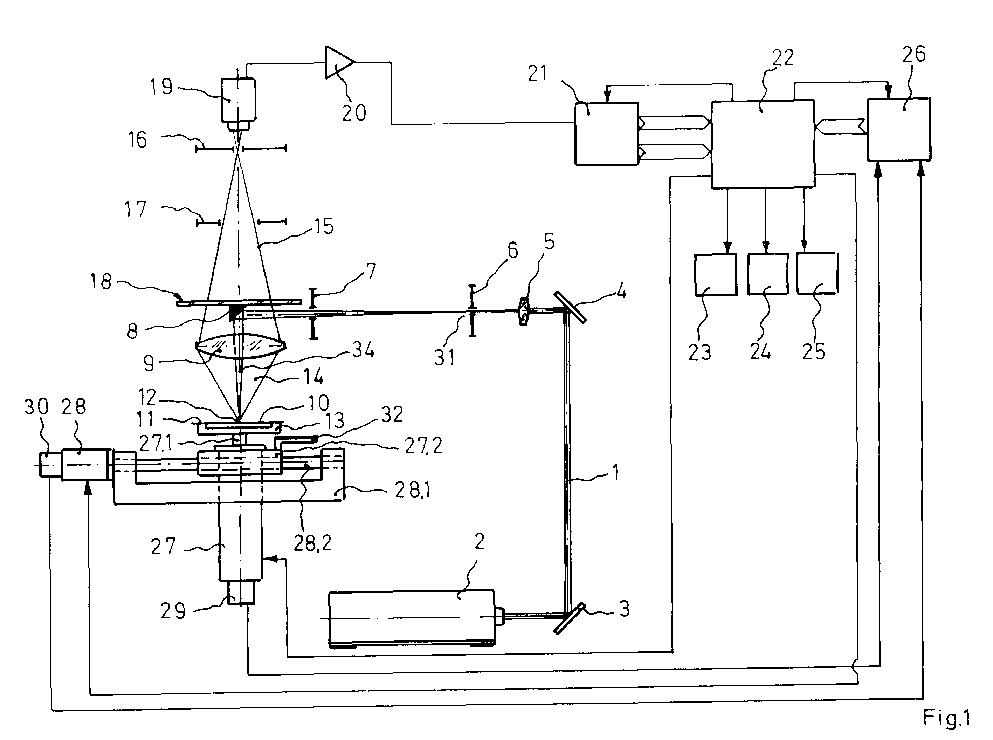

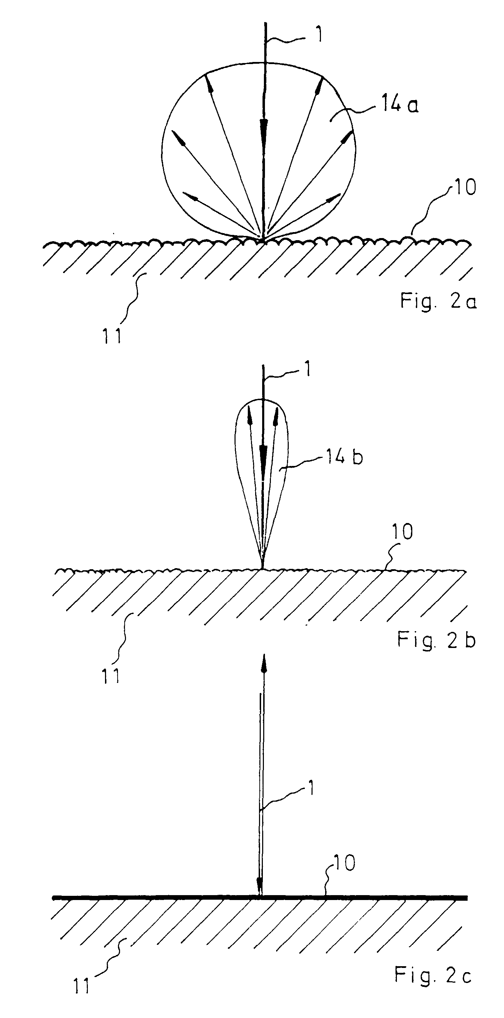

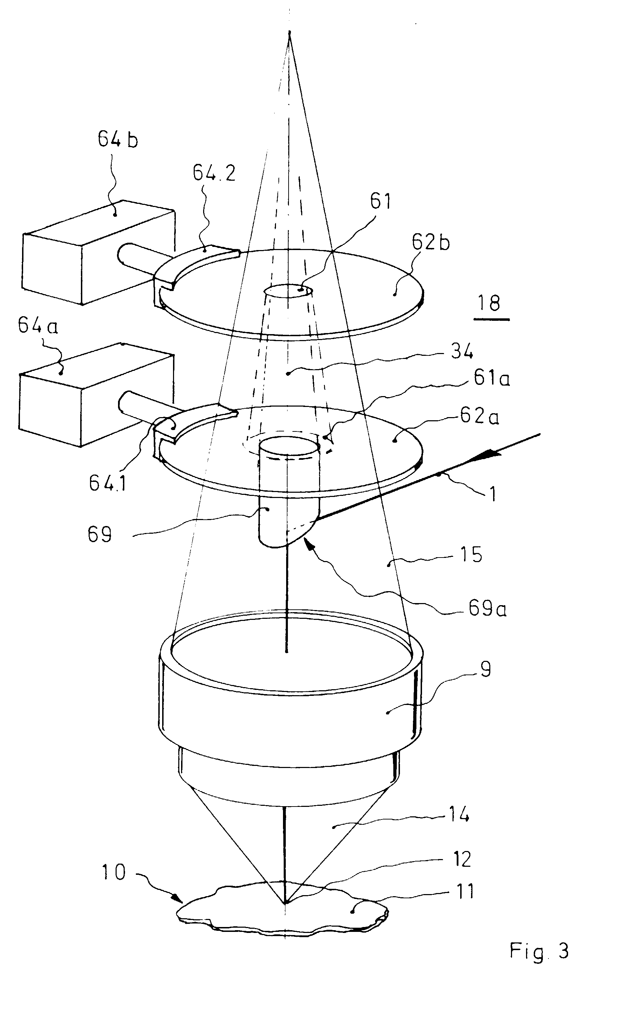

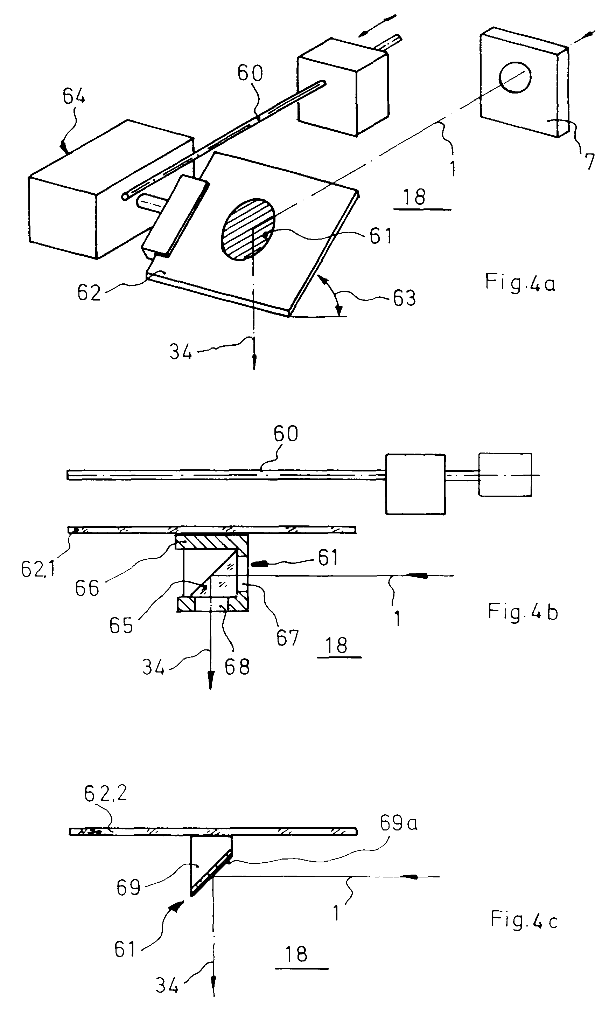

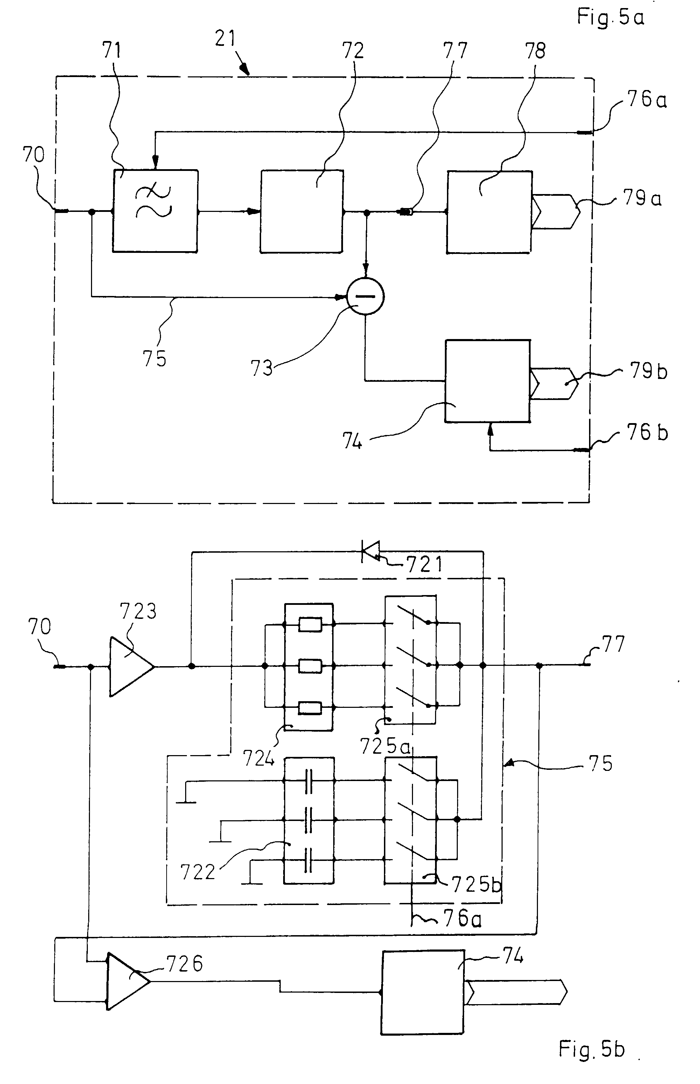

In der **Fig. 1**, einem ersten Ausführungsbeispiel der erfindungsgemässen Einrichtung, ist mit **1** ein Beleuchtungsstrahl einer Lichtquelle **2** bezeichnet, wobei die Lichtquelle **2** ein Laser ist, der Licht von sehr kurzer Wellenlänge, beispielsweise 488 oder 325 nm aussendet.
Der Beleuchtungsstrahl 1 wird über Umlenkspiegel bzw. Prismen **3, 4**, ein astigmatisches Linsensystem **5**, Blenden **6, 7**, eine Dunkelfeldumlenkung **8** und ein Objektiv **9** senkrecht auf eine Oberfläche **10** eines Objektes in Form eines Substrates **11** gerichtet und bildet dort einen Beleuchtungsspot **12.** Das Substrat **11** ist auf einer Auflagescheibe **13** angeordnet, die in einer senkrecht zum Beleuchtungsstrahl **1** verlaufenden Ebene liegt. Mit **14** ist eine von der Oberfläche **10** abgestrahlte Streulichtkeule (**Fig. 2a, 2b, 2c**) und mit **15** ein vom Objektiv **9** gesammelter Lichtkegel bezeichnet. Der Lichtkegel **15** ist durch eine Vorblende **17** und eine konfokale Blende **16** auf einen Photodetektor **19** gerichtet, welcher über einen Verstärker **20** mit einer anhand der **Fig. 5a** und **5b** näher beschriebenen Auswerteelektronik **21** verbunden ist. Die Auswerteelektronik **21** ist an eine Recheneinheit **22** angeschlossen, die mit Peripheriegeräten, wie beispielsweise Massenspeicher **23**, Bildschirm **24** und Drucker **25** in Verbindung steht. Mit **18** ist eine anhand der **Fig. 3, bzw. 4a bis 4c** näher beschriebene Dunkelfeldstop-Baugruppe bezeichnet, an welcher die Dunkelfeldumlenkung **8** angeordnet ist. Die Auflagescheibe **13** ist mit einer Welle **27.1** eines Rotationsmotors **27** verbunden, der an einem Mitnehmer **27.2** befestigt ist. Der Mitnehmer **27.2** sitzt auf einer, an einem Träger **28.1** gelagerten Spindel **28.2**, die von einem Translationsmotor **28** angetrieben wird. Ein mit der Achse des Rotationsmotors **27** gekoppelter Rotationsimpulsgeber **29** und ein mit der Achse des Translationsmotors **28** gekoppelter Translationsimpulsgeber **30** in Form eines Encoders, sind mit einem Interface **26** verbunden, das an der Recheneinheit **22** angeschlossen ist. Die Teile **27, 27.1**, **27.2, 28, 28.1, 28.2** bilden einen Antrieb, der eine aus einer Rotation und einer Translation zusammengesetzte Bewegung erzeugt. Mit **31** ist ein vom astigmatischen Linsensystem **5** erzeugtes Zwischenbild und mit **34,** die optische Achse des Objektivs **9** bezeichnet.

Das astigmatische Linsensystem **5** besteht aus wenigstens einer Linse mit zwei Fokuspunkten die zentrisch in dem Beleuchtungsstrahlen **1** liegt. Die Linse erzeugt dabei ein astigmatisches (zigarrenförmiges) Zwischenbild **31**. Vorzugsweise ist diese Linse mit zwei Fokuspunkten eine Zylinderlinse.

Das astigmatische Linsensystem **5** liegt so im Beleuchtungsstrahl **1**, dass das auf die Oberfläche projizierte astigmatische Zwischenbild **31** seine längere Ausdehnung bezüglich der Rotation in radialer, seine kürzere Ausdehnung in tangentialer Richtung aufweist. Der astigmatische (zigarrenförmige) Beleuchtungsstrahl **1** überstreicht beim Abtasten somit eine grössere Fläche und erlaubt dadurch einen grösseren Vorschub zwischen zwei Umdrehungen. Es wird so eine Verkürzung der Messzeit bei nur unwesentlichem Verlust an Messempfindlichkeit erzielt.

Gemäss **Fig. 2a** besitzen Oberflächen mit physikalisch grossen Defekten flachere, parallel zur Oberfläche **10** ausgeprägte Streulichtintensitätsverteilungen und somit eine breitere Streulichtkeule **14a.** Wie hingegen in der **Fig. 2b** dargestellt, haben Oberflächen mit physikalisch kleinen, dichten Streuzentren eine achsennahe Streulichtkeule **14b,** wobei die Streulichtkeulen **14a, 14b** aus an der Oberfläche **10** gebeugtem, gestreutem und reflektiertem Licht des Beleuchtungsstrahles **1** gebildet sind. Der Uebergang von breiten, ausladenden Streulichtkeulen **14a** auf schmälere, achsennahe Streulichtkeulen **14b** ist auf die Tatsache zurückzuführen, dass Oberflächen mit zunehmender Perfektion, d.h. deren Streuzentren immer kleinere Dimension aufweisen, eine zunehmende Ausprägung an Vorwärtsstreuung aufweisen, so dass im Extremfall (**Fig. 2c**) reine Reflexion des Beleuchtungsstrahles **1** vorhanden ist.

**Fig. 3** zeigt ein Ausführungsbeispiel einer Dunkelfeldstop-Baugruppe **18** die zwei Funktionen hat: einmal dient sie der Umlenkung des Beleuchtungsstrahls **1**, und zum anderen wird durch sie das von der Oberfläche reflektierte Licht abgeschattet und bezüglich dem Photodetektor **19** abgedeckt. In der in diesem Ausführungsbeispiel dargestellten Dunkelfeldstop-Baugruppe **18** sind die für die jeweilige Funktion notwendigen Komponenten getrennt justierbar angeordnet.

Die Umlenkung des Beleuchtungsstrahls **1** geschieht an der schrägen Fläche **69a** eines zylindrischen Körpers **69** welcher der Dunkelfeldumlenkung **8** (**Fig. 1**) entspricht. Die schräge Fläche **69a** ist dabei verspiegelt. Der zylindrische Körper ist an einer Umlenkspiegel-Trägerplatte **62a** angebracht. Diese Umlenkspiegel-Trägerplatte **62a** ist über eine erste Zwischenhalterung **64.1** von einer ersten Haltevorrichtung **64a** mechanisch so aufgenommen, dass sie zur Justierung ihrer Lage bezüglich der optischen Achse **34** verschoben bzw. gedreht werden kann. Die Justierung erfolgt über nicht näher dargestellte Justierschrauben. Die endgültige Positionierung wird in diesem Fall durch ebenfalls nicht dargestellte Klemmschrauben gesichert.

Gemäss **Fig. 3** weist die Dunkelfeldstop-Baugruppe **18** zusätzlich einen Dunkelfeldstop **61** auf, der direkt in eine Dunkelfeldstop-Trägerplatte **62b** integriert ist. Der Dunkelfeldstop ist hier durch eine kreisförmige, für die Wellenlänge des Beleuchtungsstrahls **1** undurchlässige Fläche gebildet. Diese Fläche kann beispielsweise durch partielle Beschichtung der Dunkelfeldstop-Trägerplatte **62b** hergestellt werden. Die Grösse der Fläche ist dabei so gewählt, dass stets (innerhalb des gesamten Verstellweges des zylindrische Körpers **69**) die eigentliche Abschattung des reflektierten Lichtes vorgenommen wird. Dadurch wird verhindert, dass das an den Kanten des zylindrischen Körpers **69** gestreute Licht in den Photodetektor gelangt.

Die Dunkelfeldstop-Trägerplatte **62b** kann ebenfalls auf nicht dargestellte Weise über eine zweite Haltevorrichtung **64b** bezüglich der optischen Achse justiert und arretiert werden.

Die Umlenkspiegel-Trägerplatte **62a** und die Dunkelfeldstop-Trägerplatte **62b** sind aus einem Material hergestellt, das für die Wellenlängen des Beleuchtungslichtes transmittierend ist (z.B. Glas oder Quarzglas). Zur Optimierung der Transmission können die Oberflächen von Umlenkspiegel-Trägerplatte **62a** und Dunkelfeldstop-Trägerplatte **62b** optisch vergütet sein.

Nach **Fig. 4** kann die Dunkelfeldstop-Baugruppe durch Kombination derer Doppelfunktion vereinfacht aufgebaut werden:

Gemäss **Fig. 4a** weist die Dunkelfeldstop-Baugruppe **18** einen Dunkelfeldstop **61** auf, der direkt in eine Dunkelfeldstop-Trägerplatte **62** integriert ist und welcher der Dunkelfeldumlenkung **8** (**Fig. 1**) entspricht. Das Zentrum der Dunkelfeldstop-Trägerplatte ist mit einem das Licht des Beleuchtungsstrahls **1** reflektierenden Material beschichtet. Die Form der reflektierenden Fläche des Dunkelfeldstops **61** ist dabei so, dass die Projektion der Dunkelfeldstop-Baugruppe **18** entlang der optischen Achse **34** kreissymmetrisch ist. Bei einem Neigungswinkel **63** von > 0° ist diese Form der reflektierenden Fläche die einer elliptischen Scheibe. Die Dunkelfeldstop-Trägerplatte **62** selbst ist aus einem Material, das für die Wellenlängen des Beleuchtungslichtes transmittierend ist (z.B. Glas oder Quarzglas). Zur Optimierung der Reflexion bzw. Transmission können die Oberflächen von Dunkelfeldstop und Dunkelfeldstop-Trägerplatte optisch vergütet sein.

Die Dunkelfeldstop-Trägerplatte **62** ist von einer Haltevorrichtung **64** mechanisch so aufgenommen, dass sie zur Strahl justierung verschoben bzw. gedreht werden kann. Diese Justierung kann über nicht dargestellte Stellschrauben vorgenommen werden. Die endgültige Position wird in diesem Fall durch ebenfalls nicht dargestellte Klemmschrauben gesichert.

Nach **Fig. 4b** ist der Dunkelfeldstop **61** als Prisma **65** ausgeführt. Der Beleuchtungsstrahl 1 wird hier durch Totalreflexion an der schrägen Prismenoberfläche umgelenkt. Das Prisma **65** ist von einem Prismenhalter **66** aufgenommen. Der Prismenhalter **66** ist an der Dunkelfeldstop-Trägerplatte **62.1** befestigt. Der Prismenhalter **66** ist zylinderförmig, so dass seine Projektion entlang der optischen Achse **34** der Abbildungsoptik kreissymmetrisch ist. Der Beleuchtungsstrahl **1** gelangt durch eine erste Oeffnung **67** im Prismenhalter **66**. Die erste Oeffnung **67** und eine zweite Oeffnung **68** verhindern, dass unerwünschtes Licht in den Randzonen des Beleuchtungsstrahls **1** passieren kann.

Gemäss **Fig. 4c** geschieht die Umlenkung des Beleuchtungsstrahls **1** an der schrägen Fläche eines zylindrischen Körpers **69.** Die schräge Fläche ist dabei verspiegelt. Der zylindrische Körper ist an einer Dunkelfeldstop-Trägerplatte **62.2** befestigt.

Die Dunkelfeld-Trägerplatten **62.1, 62.2** in den **Fig. 4b** und **4c** sind ebenfalls justierbar gelagert. Der Vorteil dieser Ausführungsbeispiele gegenüber dem ersten liegt darin, dass die reflektierende Fläche des Dunkelfeldstops **61** näher an das Objektiv **9** (**Fig. 1**) gebracht werden kann. Eine möglichst nahe Position des Dunkelfeldstops **61** zum Objektiv **9** bringt eine kleine abgeschattete Fläche im Streulichtkegel und ist somit vorteilhaft.

In den **Fig. 4a** und **4b** ist mit **60** eine Abschattungsvorrichtung bezeichnet, mittels welcher wahlweise eine Assymmetrie in die Abbildungsoptik eingebracht werden. Mit dieser Abschattungsvorrichtung **60** lassen sich z.B. durch zweimaliges Messen - einmal mit und einmal ohne Abschattungsvorrichtung **60** - gerichtete Hazestrukturen von ungeordneten unterscheiden. Zur Erkennung von eindimensionalen Defektstrukturen - wie z.B. Polierfehler - ist die Form dieser Abschattungsvorrichtung **60** die eines Stabes. Zur gezielten Unterdrückung und/oder Selektion von anderen Strukturen, sind andere Formen der Abschattungsvorrichtung **60** möglich.

Der vorstehend beschriebene optische Teil der Einrichtung arbeitet wir folgt:
Der über die Prismen **3, 4** umgelenkte Beleuchtungsstrahl **1** fällt durch das astigmatische Linsensystem **5** und die Blenden **6, 7** auf die Dunkelfeldumlenkung **8**, wo er wiederum umgelenkt wird. Die Dunkelfeldumlenkung **8**, bzw. der Dunkelfeldstop **61** ist derart justiert, dass der umgelenkte Beleuchtungsstrahl **1** nach der Umlenkung exakt zentrisch und im rechten Winkel durch das Objektiv **9** tritt, und somit nach der Umlenkung exakt in der optischen Achse **34** des Objektives und damit der gesamten Abbildungsoptik verläuft. Das Objektiv **9** fokussiert den Beleuchtungsstrahl **1** auf die Substratoberfläche **10**, so dass das von dem astigmatischen Linsensystem **5** erzeugte Zwischenbild **31** auf die Substratoberfläche **10** abgebildet wird. Da der Beleuchtungsstrahl **1** senkrecht auf die Substratoberfläche **10** fällt, verläuft das reflektierte Licht exakt entlang des einfallenden Beleuchtungsstrahls **1** und trifft nach dem Objektiv erneut auf den Dunkelfeldstop **61** von dem dieser wiederum in Richtung der Lichtquelle **2** umgelenkt wird. Der gestreute bzw. gebeugte Anteil des Lichtes **14** wird unter dem Winkel der numerischen Apertur des Objektiv **9** gesammelt und in die konfokale Blende **16** abgebildet. Der Abstand zwischen Oberfläche **10** und der Oeffnung der konfokalen Blende **16** ist gleich dem Abstand des zigarrenförmigen Zwischenbildes **31** von der Oberfläche **10.**

Sehr dichte und feine Defektstrukturen der Oberflächenfehler (**Haze**) erzeugen neben Streulicht auch einen gewissen Anteil an gebeugtem Licht. Dies ist durch Beugung am Gitter zu verstehen, wobei das Gitter durch die, durch die Defekte gebildete Struktur (z.B. Polierfehler), gebildet wird. Der Lichtkegel des auf diese Weise entstandenen Lichtes besitzt keine örtlich homogene Intensitätsverteilung. An der Stelle der Dunkelfeldstop-Baugruppe **18** weist das Licht deshalb eine bezüglich der optischen Achse **34** rotationssymmetrische Intensitätsverteilung auf (z.B. propeller- oder sternförmig). Die Richtung dieser Intensitätsverteilung hängt streng mit der Richtung der Struktur der Oberfläche **10** zusammen. D.h. rotiert das Substrat, rotiert das Intensitätsmuster synchron dazu.

Um durch Defekte gebildete Oberflächenstrukturen richtungsunabhängig messen zu können, ist die Dunkelfeldstop-Baugruppe **18** bzgl. der optischen Achse **34** völlig rotationssymmetrisch aufgebaut. Um ferner möglichst auch achsennahes Streulicht passieren zu lassen, muss der effektiv vom Dunkelfeldstop **61** ausgeblendete Anteil des Streulichtkegels **14** möglichst klein sein. Mit der beschriebenen Einrichtung lässt sich das günstigste Verhältnis zwischen gesammelten und abgeschatteten Steulicht erzielen. Dabei bleibt die Rotationssymmetrie im Abbildungslicht völlig erhalten.

Das Objektiv **9** fokussiert das Streulicht **14** auf die konfokale Blende **16.** Die Oeffnung dieser konfokalen Blende **16** hat in etwa die Form des auf der Substratoberfläche fokussierten Beleuchungsstrahls (Beleuchtungsspot **12**). Bekanntlich hat der Beleuchtungsspot **12** eine längliche Form; die lange Beleuchtungsspotseite verläuft radial, die kurze Beleuchtungsspotseite tangential zur Rotationsrichtung. Die Oeffnung der konfokalen Blende **16** ist vorzugesweise ein Schlitz, dessen Abmessungen etwa die mit dem Vergrösserungsfaktor der Abbildungsoptik multiplizierte Spotdimensionen haben. Dies hat den Vorteil, dass lediglich das Streulicht der vom Beleuchtungsstrahl **1** erhellten Stelle durch die Blendenöffnung zum Photodetektor **19** gelangt. In der Praxis macht sich dies durch Unempfindlichkeit gegen Umlicht und durch ein günstiges Signal/Rausch-verhältnis bemerkbar.

Eine oder mehrere Vorblenden **17** im Abbildungsteil halten zusätzlich unerwünschtes Fremdlicht, z.B. von Reflexionen an Bauteilen, von Photodetektor **19** fern. Die Vorblenden begünstigen ebenfalls das Signal/Rauschverhältnis und lassen somit, wie die speziell geformte konfokale Blende **16**, die Messempfindlichkeit des Systems steigern.

Im Photodetektor **19** werden die optischen Signale in elektronische umgewandelt und im breitbandigen Verstärker **20** zur Weiterverarbeitung verstärkt. Das am Verstärkungsausgang liegende Signal ist als Summe der Signale von Haze, LPD's und Liniendefekte aufzufassen. Dieses Signal muss in der Weiterverarbeitung in seine Einzelkomponenten zerlegt werden. Die Weiterverarbeitung des elektronischen Signals geschieht zunächst in der Auswerteelektronik **21**, wobei die Auswerteelektronik das Eingangssignal in die Hazesignale und die Signale der LPD's trennt.

Gemäss **Fig. 5a** weist die Auswerteelektronik **21** einen Singnaleingang **70** auf, der mit dem Ausgang des Verstärkers **20** (**Fig. 1**) und mit einem, aus einem Hazefilter **71** und einer Peakunterdrückung **72** bestehendem Hazekanal verbunden ist. Der Signaleingang **70** ist weiterhin mit einem Partikelkanal verbunden, der aus einer Subtrahierschaltung **73** und einem Peakdetektor **74** besteht. Mit **76a** ist ein mit dem Hazefilter **71** verbundener Bandbreitenvorgabe-Eingang und mit **76b** ein am Peakdetektor **74** angeschlossener weiterer Eingang bezeichnet. Ein Hazefilterausgang **77** steht mit einen Analog-Digital-Wandler **78** in Verbindung, dessen Ausgang mit **79a** bezeichnet ist. Der Peakdetektor **74** weist einen digitalen Ausgang **79b** auf.

In der **Fig. 5b** ist mit **75** ein Tiefpassfilter bezeichnet, das der wesentlichste Bestandteil des Hazekanals **71, 72** (**Fig. 5a**) ist. Das Tiefpassfilter **75** besteht aus Filterkondensatoren **722**, Widerständen **724** und einer ersten und zweiten Schalteinrichtung **725a, 725b.** Die Widerstände **724** sind an den einen Enden über die erste und die zweite Schalteinrichtung **725a, 725b** mit den Filterkondensatoren **722** und dem Hazefilterausgang **77** (**Fig. 5a**) verbunden. Der Hazefilterausgang **77** steht über eine als Peakunterdrückung **72** dienende Diode **721** mit den anderen Enden der Widerstände **724** und dem Ausgang eines weiteren Verstärkers **723** in Verbindung. Der Eingang des weiteren Verstärkers **723** ist mit dem Signaleingang **70** (**Fig. 5a**) und mit dem nicht-invertierenden Eingang eines dritten Verstärkers **726** verbunden, der als Subtrahierer **73** (**Fig. 5a**) dient. Der invertierende Eingang des dritten Verstärkers **726** ist am Hazefilterausgang **77** angeschlossen, während sein Ausgang mit dem Eingang des Peakdetektors **74** in Verbindung steht. Die Schalteinrichtungen **725a, 725b** können über den Bandbreitevorgabe-Eingang **76a** betätigt werden.

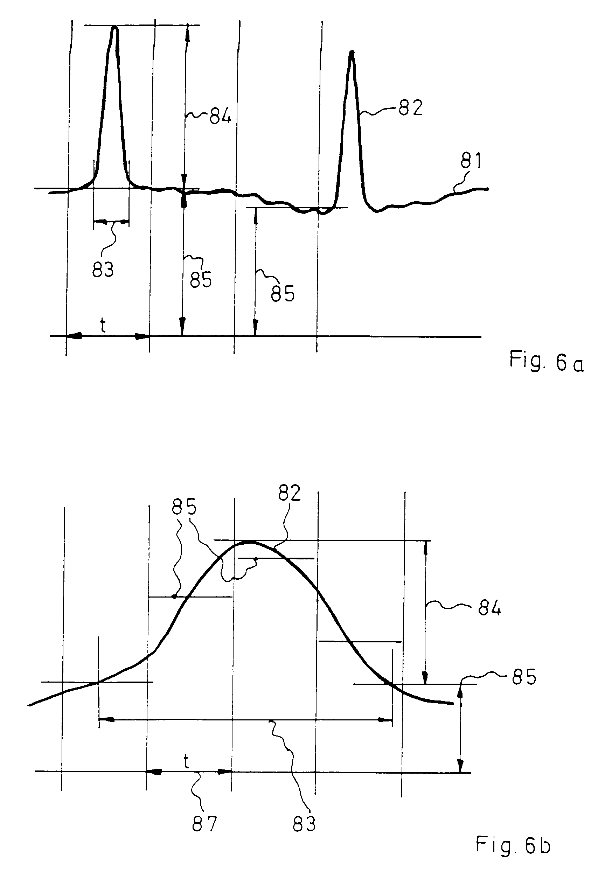

Die vorstehend beschriebene Auswerteelektronik arbeitet wie folgt:
Die Auswerteelektronik **21** unterscheidet LPD's und Haze aufgrund des zeitlichen Signalverlaufs (**Fig. 6a, 6b**). Während Hazesignale **81** einen relativ langsam ändernden Signalverlauf aufweisen, zeichnen sich LPD's durch kurze Pulse **82** aus. Das Tiefpassfilter **75** lässt die niederfrequenten Signale der Hazevariationen passieren, während die Pulse der LPD's unterdrückt werden. Die Amplitude der Pulse **82** ist proportional zur Grösse des LPD's. Die Pulsbreite **83** solcher Pulse hängt bei LPD's die klein gegen den Beleuchtungsspot **12** sind, von der Spotbreite und von der Geschwindigkeit ab, mit der sich die LPD's gegenüber dem Beleuchtungsspot **12** bewegen. Führt das Substrat, dessen Oberfläche untersucht werden soll eine konstante Rotationsbewegung aus, so ändert sich die Geschwindigkeit der Oberfläche gegenüber dem Beleuchtungsspot **12** mit dem Radius. Die Geschwindigkeit ist am äusseren Rand des Substrates **11** am grössten und wird im Rotationszentrum des Substrates Null. Pulse der LPD's werden gegen das Substratzentrum breiter (**Fig. 6b**), was bedeutet, dass ohne besondere Vorkehrungen, LPD's die wegen ihres Signalverlaufs am Rand des Substrates als solche erkannt würden, im Zentrum als Hazevariation klassifiziert würden, oder, Hazevariationen könnten im Innern der Substratflächen richtig als solche erkannt werden, wogegen am Substratrand gleiche Hazevariationen als LPD's gemessen würden. Obiges würde zu unzulässigen Messfehlern führen. Diese Fehler werden durch das einstellbares Tiefpassfilter **75** behoben. Die Filterkonstante wird dabei in Abhängigkeit von der radialen Position und von der Rotationsgeschwindigkeit gesetzt. Das Tiefpassfilter **75** weist am Substratrand eine kleine, im Substratzentrum eine grosse Zeitkonstante auf. Bei schnellen Rotationsgeschwindigkeiten ist dessen Zeitkonstante klein bei langsamen gross. Die Anpassung der Filterkonstante wird einmal bei der Vorgabe der Rotationsgeschwindigkeit und anschliessend während der Messung durch Umschaltung oder durch kontinuierliche Veränderung der Filterkonstante vorgenommen. Das Ziel dabei ist, ein konstantes Verhältnis zwischen Filterkonstante und relativer Substratgeschwindigkeit zu erreichen. Die Filteranpassung geschieht dabei über den Brandbreitenvorgabeeingang **76a.**

Da die Amplitude von LPD Signalen um Grössenordnungen grösser sind als die Amplitude von Hazesignalen, ist ein gewisses Uebersprechen von Pulsen im Hazekanal unvermeidbar. Ein solches Uebersprechen führt zu einer Verfälschung der Hazewerte und - wie später erläutert - zu einer Verfälschung der eigentlichen Pulsamplitude. Die Peakunterdrückung wird mit der Diode **721** realisiert. Diese Diode **721** schliesst einen durch einen Puls bedingten Spannungsanstieg über den Filterkondensatoren **722** nach dessen Abfall in den Ausgang des weiteren Verstärkers **723** kurz. Somit werden grosse Spannungsabweichungen zwischen dem Ausgang des weiteren Verstärkers **723** und dem Hazefilterausgang **77** unterdrückt. Das Hazesignal am Hazefilterausgang **77** wird mittels des Analog-Digitalwandlers **78** digitalisiert. Da die Hazevariationen in der Praxis äusserst gering sind, kleiner als 1% der Signalamplitude, muss der Analog-Digitalwandler **78** hochauflösend sein.

Am Ausgang **79b** des Partikelkanals liegen die Signale von LPD's und Linedefects an. Die Grösse eines solchen Defekts wird über die Amplitude ermittelt, wobei diese Amplitude der reinen Pulsamplitude **84** - d.h. abzüglich der Hazeamplitude **85** - entspricht. Besonders bei kleinen LPD's ist die Hazeamplitude **85** oft grösser als die Pulsamplitude **84**. Darum ist es wichtig, dass vom Ein_ gangssignal der exakte Hazewert subtrahiert wird, bevor der Wert der Amplitude des LPD's weiterverarbeitet wird. Der exakte Wert der Hazeamplitude liegt, wie oben beschrieben, am Ausgang **77** des Hazefilters an. Durch Subtraktion des Signals am Eingang **70** und des Signals am Ausgang **77** mittels des als Subtrahierschaltung **73** verwendeten dritten Verstärkers **726** entsteht somit das LPD-Signal.

Die Anforderungen an den Peakdetektor **74** sind in dem System extrem hoch. Gleichzeitig werden hohe Linearität, niederes Rauschen, Schnelligkeit und extrem kurze Rückstellzeiten verlangt. Um all diesen Anforderungen gerecht zu werden, wird ein digitaler Peakdetektor eingesetzt. Diese Bauteile besitzen einen analogen Eingang und einen digitalen Ausgang **79b** an dem direkt der digitalisierte Maximalwert der Signal-Spannung am Eingang anliegt.

Ob ein Messwert ein Haze oder ein LPD-Wert ist, wird aufgrund der Peakhöhe **84** entschieden. Hierzu vergleicht die Auswertelektronik den Peakwert mit einem Referenzwert. Liegt der Peakwert über dem Referenzwert, ist der Messwert ein LPD-Wert und wird mittels eines Flags markiert.

An den Ausgängen der Auswerteelektronik **79a, 79b** liegen die Messdaten digitalisiert als Haze- und als LPD-Daten vor. Die Werte dieser Messdaten werden in rascher Folge von der Recheneinheit **22** ausgelesen und abgespeichert. Es liegen somit zwei Datensätze vor: ein Hazedaten- und ein LPD-Datensatz.

Neben den eigentlichen Messwertdaten, werden die zum Messwert gehörenden Positionsdaten erfasst. Aus den Messwert- und den dazugehörenden Positionsdaten kann der jeweilige Streulichtwert von jedem Ort auf dem Substrat ermittelt und wiedergegeben werden.

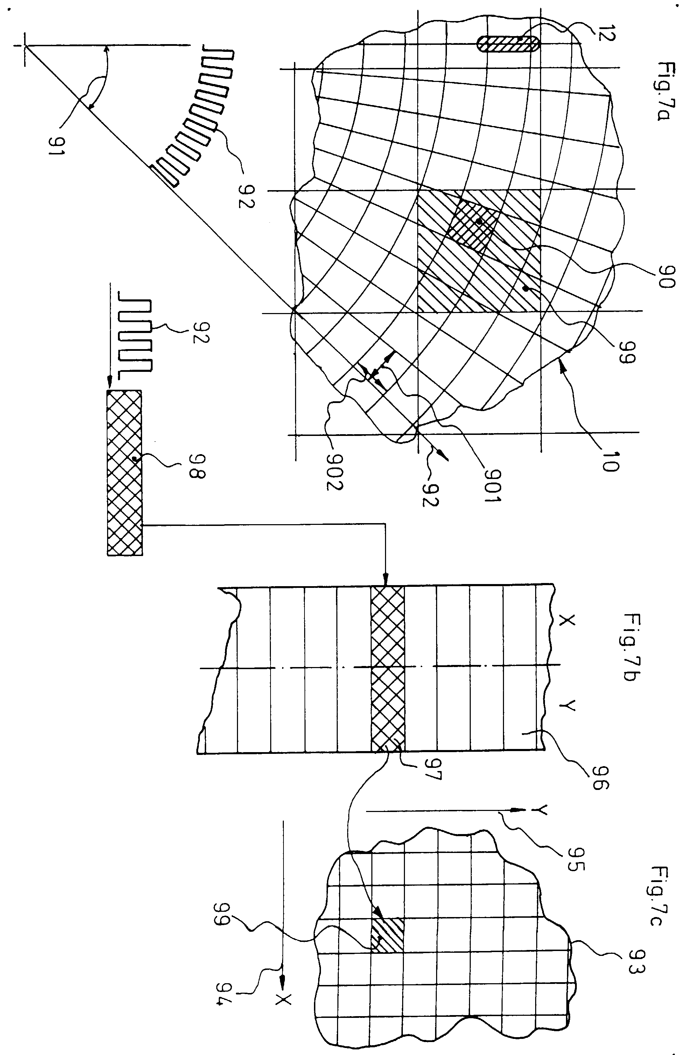

Im folgenden wird anhand der Fig. **1, 7a, 7b** und **7c** die Ermittlung der Positionsdaten beschrieben:
Die Messwerte werden während der Messung in vorgegebenen Zeitabständen eingelesen und digitalisiert. Der Auslöser für das Einlesen eines Messwertes ist der mit der Achse des Rotationsmotors **27** gekoppelter Rotationsimpulsgeber **29.** Als Rotationsimpulsgeber kann zum Beispiel ein optischer Encoder dienen.

Die Notwendigkeit für ein kontinuierliches Einlesen von Messwertdaten - im Gegensatz zum ereignisbezogenen Einlesen - ergibt sich aus der Hazemesstauglichkeit des System. Sehr feine Defekte die Haze verursachen, sind örtlich nicht mehr auflösbar und verursachen Effekte, die sich über die gesamte Oberfläche ziehen. Die Messung dieser Defekte erfordert eine mittelnde Messanordnung die lückenlos die gesamte Oberfläche erfasst.

Der Vorteil der Kopplung des Rotationsimpulsgebers **29** mit der Achse des Rotationsmotors liegt darin, dass dadurch eine Unabhängigkeit der Messwert-Einlesezeit von der Rotationsgeschwindigkeit erzielt wird. Dadurch kann das System über einen beliebigen Rotationsgeschwindigkeitsbereich betrieben werden. Zusätzlich können Messwerte während der Beschleunigungsphase des Rotationsantriebs aufgenommen werden. Da der örtliche Abstand zwischen den Messwertzyklen gegen das Zentrum hin in der beschriebenen Anordnung immer enger wird, werden die Anzahl Pulse pro Umdrehung in Abhängigkeit von der radialen Position gegen das Zentrum durch eine programmierbare Frequenzteilerschaltung reduziert. Dies verringert den für die Analyse und Speicherung der Messwerte benötigten Speicherbedarf.

Während der Rotationsimpulsgeber **29** eine Winkelinformation **91** liefert, liefert der Translationsimpulsgeber **30** eine radiale Positionsinformation **92** (**Fig. 7a, 7b**) zu einem Messwert. Der Translationsimpulsgeber **30** kann als linearer Inkrementalgeber oder, im Falle einer Spindel als Linearantrieb, ein Encoder sein der mit der Achse des Translationsmotors **28** gekoppelt ist. Der Rotationsimpulsgeber **29** und der Translationsimpulsgeber **30** liefern die Position eines Messwertes somit in Polarkoordinaten. Das Messergebnis soll aber auf einem Computerbildschirm **24** oder einem Computerdrucker **25** dargestellt werden oder in einem Massenspeicher **23** abgespeichert werden können. Das gesamte Messergebnis setzt sich aus einer Pixelfläche **93** (**Fig. 7c**) bestehend aus einer ersten Anzahl Pixel **99** in der einen Richtung **94** (**x**) und einer zweiten Anzahl Pixel **99** in der anderen Richtung **95** (**y**) zusammen. Jedes Pixel **99** repräsentiert wiederum ein bestimmtes Flächenteil **90** der Substratoberfläche **10.** Für diese Darstellung und die softwaremässige Verarbeitung der Daten, müssen die Polarkoordinaten in kartesische Positionsdaten umgewandelt werden.

Da weiters die Anzahl der aufgeworfenen Messwerte gross und die Messzeit klein sein muss, werden die Messwerte in sehr rascher Folge eingelesen. Dies bedingt ein äusserst rasches Koordinatentransformationsverfahren. Die Koordinatentransformation über die trigonometrische Umrechnung eines jeden Positionswertes wäre zu zeitaufwendig. Ein entsprechend schnelles Verfahren ist notwendig. Die verwendete Umwandlung nutzt daher eine Liste **96** zur Koordinatentransformation. Diese Liste **96** muss für eine bestimmte Substratgrösse nur einmal berechnet und gespeichert werden. In der Liste ist eine Sequenz von Speicheradressen **97** abgelegt. Jede Speicheradresse zeigt auf einen Speicherplatz, der wiederum ein Pixel **99** repräsentiert. Ein Pixel **99** kann dabei mehrere jedoch stets mehr als einen Eintrag in der Liste haben.

Die Anzahl der in der Liste abgelegten Speicheradressen ist dabei gleich der Anzahl von Pulsen des Rotationsimpulsgebers **29** (Rotationsimpulse **92**) während einer Messung der Substratoberfläche **10**. Diese Anzahl hängt damit von der Anzahl Rotationspulse pro Umdrehung und von der Anzahl Translationspulse pro Messung ab. Ein Zeiger **98** zeigt auf die aktuelle Speicheradresse **97** in der Liste. Diese aktuelle Speicheradresse enthält die Adresse desjenigen Pixels **99,** dessen Ort dem Ort (**90, Fig. 7a**) des Beleuchtungsspots **12** auf der Substratoberfläche **10** entspricht. Der Wert des Zeigers **98** wird beim Eintreffen eines jeden Rotationspulses **92** um Eins erhöht. Dadurch zeigt der Zeiger während einer Messung sequentiell genau einmal auf jede Speicheradresse **97** in der Liste. Die Speicheradressen der Liste sind zuvor so mittels Koordinatentransformation berechnet, dass sie in dieser Reihenfolge stets das dem Ort des Beleuchtungsspot **12** entsprechende Pixel adressieren.

Zwischen zwei Einlesezyklen von Messwerten überstreicht der Beleuchtungsspot **12** das Flächenteil **90.** Die Grösse dieses Flächenteiles bildet sich aus dem Weg **901** den der Beleuchtungsspot **12** während diesem Einlesezyklus in Rotationsrichtung **94** (**x)** zurücklegt und dem Vorschub **902** des Substrates während einer Umdrehung. Diese Grösse des Flächenteiles **90** ist kleiner als die auf die Substratoberfläche **10** projizierte Fläche eines Pixels **99.** Somit wird während einer Messung jedes Pixel mehr als einmal adressiert (Ueberlappung). Die Ueberlappung ist am Substratrand kleiner als im Substratzentrum und wird für die Auswertung wie folgt berücksichtigt.

Alle Messwerte, die als Hazewerte von der Auswerteelektronik ausgehen, werden innerhalb eines Pixels summiert. Zugleich wird die Anzahl der pro Pixel aufsummierten Messwerte für jedes Pixel gespeichert. Nach Abschluss der Messwerteaufnahmen werden für jedes Pixel die Messwertesummen durch die Anzahl der abgelegten Messwerte dividiert (Mittelwertbildung). Die Hazewerte werden dadurch, nach der elektronischen Mittelung mittels des Hazefilters, ein zweites Mal gemittelt. Partikel oder LPD-Werte werden im Gegensatz zu Hazewerten maximiert. Dabei wird jeder LPD-Wert vor der Abspeicherung mit dem LPD-Wert der sich bereits in dem entsprechenden Pixel befindet verglichen. Ist der neue LPD-Wert grösser als der bereits gespeicherte, so wird dieser mit dem neuen überschrieben, ist der neue LPD-Wert kleiner als der gespeicherte, so wird der neue Wert verworfen. Zusätzlich zur elektronischen Peakwertbildung werden somit die LPD-Werte ein zweites Mal maximiert.

Nach Abschluss der Messwerteaufnahmen liegen zwei Messwertefelder vor. Ein Messwertefeld enthält die Haze-Messwerte, ein weiteres die LPD-Messwerte. Diese Messwertefelder können nun dargestellt, gedruckt oder gespeichert werden.

Die Darstellung der Messwerte erfolgt als farbkodierte 2-dimensionale Graphik, wobei zwischen Hazegraphik (**Fig. 8a**) und LPD-Graphik (**Fig. 8b**) gewählt werden kann. Die Farbkodierung weist einem bestimmten Streulichtamplitudenbereich eine Farbe zu. Da der Dynamikbereich der Messwerte grösser ist als die Anzahl der zur Verfügung stehenden Farben und da insbesondere Hazeinhomogenitäten äusserst klein gegen den Dynamikbereich hin sein können, ist der wirklich dargestellte Ausschnitt **43** des Dynamikbereichs wählbar. Die Auswählbarkeit des dargestellten Ausschnitts **43** ist auch dann sinnvoll, wenn LPD's von lediglich einer bestimmten Grösse betrachtet werden sollen. Die untere Limite **40** und obere Limite **41** des dargestellten Dynamikbereiches ist dabei einfach -per Knopfdruck **42-** erschliessbar. Zur Orientierung wird der dargestellte Bereich als verschiebbare Marke **43a** in einem Fenster angezeigt (ähnlich Scrollbar).

Die Farbskala **44** für Hazegraphiken **45** ist so gewählt, dass hohe Streulichtamplituden hellen, rot-gelben, niedrige Streulichtamplituden dunklen, blau-grauen Farbtönen entsprechen. Das Hazebild entsteht somit auf schwarzem Hintergrund. Pixel, deren Messwerte über der oberen Limite des dargestellten Dynamikbereichs liegen, werden weiss dargestellt.

Die Farbskala für LPD-Graphiken **46** ist die invertierte der Farbskala für Hazegraphiken. Das LPD-Bild steht somit auf weissem Hintergrund. LPD's, die über der oberen Limite des dargestellten Dynamikbereichs liegen, werden unterdrückt, bzw. wiederum weiss dargestellt. Wie bei der Hazedarstellung wird auch hier der dargestellte Dynamikbereich zur Orientierung als verschiebbare Marke in einem Fenster angedeutet.

Zusätzlich zu der Farbkodierung werden zu den Farbskalen, die zu einer Farbe gehörenden Messwerte **47a, 48a bzw. 47b, 48b** numerisch angezeigt. Die Einheit für LPD's ist dabei umLSE (Micron Latex Sphere Equivalent). 1 umLSE ist dabei die von einer lum grossen Latexkugel verursachte Streulichtamplitude.

Die umLSE-Werte werden vor der Darstellung aus einer Tabelle mit Stützwerten durch Interpolation errechnet. Die Stützwerte in der Tabelle werden durch messen eines Substrates mit Latexkugeln bekannter Grösse ermittelt. Die Stützwerte brauchen pro System lediglich einmal geeicht werden.

Ergänzt wird die 2-dimensionale graphische Darstellung der Oberfläche durch ein Histogramm **49a, 49b.** Im Histogramm werden Grösse der Defekte gegen Anzahl, bzw. Streulichtamplitude gegen Anzahl, aufgetragen. Das Histogramm liefert Informationen über die statistische Verteilung der verschiedenen Defektgrössen.

Die zu messenden Substratoberflächen können sehr unterschiedlich sein. In der Praxis kann deren Streuvermögen um mehrere Zehnerpotenzen variieren. Diese Variation übersteigt den Dynamikbereich der Messanordnung. In Fällen, wo der zu erwartende Haze- oder LPD-Grössenbereich nicht vorhersehbar ist, ist eine Anordnung zur automatischen Einstellung der Messempfindlichkeit unumgänglich (Prescale). Ziel des Prescales ist es, die Messempfindlichkeit für jedes Substrat automatisch so einzustellen, dass die Messwerte stets in einen auflösbaren Bereich fallen.

In dem beschriebenen System wird dieses Ziel dadurch erreicht, dass vor Beginn der eigentlichen Messdatenaufnahme, das Substrat soweit verfahren wird, bis der Beleuchtungsspot beim Rotieren des Substrates nicht mehr die Randzone des Substrates trifft, Während das Substrat rotiert, wird die Messempfindlichkeit, beginnend mit der geringsten Messempfindlichkeit, schrittweise erhöht. Die Messwerte werden bei jedem Schritt während einer bestimmten Periode - z.B.während einer Umdrehung - aufgenommen und anschliessend gemittelt. Liegt der entstandene Mittelwert unter dem vorgegebenen Wert, wird die Messempfindlichkeit erhöht und erneut eine gemittelte Messung durchgeführt. Dieser Vorgang wird solange wiederholt, bis die gemittelten Messwerte dem vorgegebenen Wert entsprechen. Ist der vorgegebene Wert erreicht, wird die eigentliche Messung gestartet.

Nachdem die Messdaten aufgenommen und verarbeitet vorliegen, ist die automatische Wahl des dargestellten Bereiches für die einfache Bedienung notwendig (Autoscale). Diese Wahl des dargestellten Haze-Bereiches wird durch automatisches setzen der unteren und der oberen Limite **40, 41** vollzogen. Die untere und obere Limite wird dabei aus den Hazedaten errechnet. Durch Mittelwertbildung und Streuwertbildung der Messwerte werden die untere und obere Limite durch Verschiebung und Skalierung so gesetzt, dass ein bestimmter Anteil der Messwerte in den dargestellten Ausschnitt **43** fällt. Bei günstiger Wahl dieses Anteils führt dieses Verfahren zu stets aussagekräftigen Darstellungen des Hazeverlaufs auf dem Substrat.

Mit dem Prescale ist es somit möglich, einfach und zeitsparend Substrate von sehr unterschiedlicher Qualität zu untersuchen. Das Prescale sorgt dafür, dass die Messungen stets in einem sinnvollen Empfindlichkeitsbereich durchgeführt werden und somit einerseits rauschfrei und andererseits nicht übersteuert sind. Das Autoscale sorgt für die überschaubare Darstellung der Messdaten. Prescale und Autoscale erhöhen den Bedienungskomfort des Systems und steigern dessen Automatisierungsgrad.

Bei Systemen der hier beschriebenen Art ist schliesslich die bekannte und gleichbleibende Orientierung der Messresultate wichtig. Ist die Substratoberfläche **10** ohne die Randzonen gemessen worden, so ist die Orientierung der Messung aufgrund des Messausdruckes nicht mehr nachvollziehbar.

Wafer besitzen für deren Orientierung eine Markierung am Substratrand (Flat oder Notch). Mit dieser Orientierung kann der Wafer eindeutig orientiert werden. Da das hier beschriebene System während der Messung eine Rotations-bewegung ausführt, kann mit nur geringem Aufwand eine automatische Orientierungsvorrichtung realisiert werden. Diese Orientierungsvorrichtung soll die Orientierung des Substrates erkennen und es somit erlauben, die Messresultate in der gewünschten Orientierung darzustellen.

Am sinnvollsten wird die Erkennung der Substratorientierung vor der eigentlichen Messung durchgeführt. Ist die Orientierung bekannt, erscheint durch Starten der Messung an einem bestimmten, von der Lage der Orientierungsmarkierung abhängigen Winkel, das Messresultat stets in der gewünschten Orientierung.

Das hier beschriebene System nutzt zum Erkennen der Orientierung des Substrates das Signal, das beim Ueberschreiten des Beleuchtungsspots **12** über den Substratrand erzeugt wird. Bei der Beleuchtung des Substratrandes entstehen sehr hohe Streulichtamplituden, die von dem System erkannt werden.

Zur Orientierung des Substrates wird somit das Substrat soweit verfahren, dass der Beleuchtungsspot nicht mehr auf das Substrat trifft. Während das Substrat rotiert, wird dieses soweit verfahren, bis der Beleuchtungsspot **12** die Substratfläche nicht mehr verlässt. Somit wird die gesamte Randzone abgefahren. Dabei erzeugt die Orientierungsmarke bzw. die Orientierungsmarken des Substrates (Flat oder Notch) ein Signal, dessen Breite mit kleiner werdendem Radius abnimmt. Da die Dimensionen der Orientierungsmarken, die Rotationsgeschwindigkeit und der Verfahrweg pro Umdrehung bekannt sind, kann aus der Signalbreite sowie aus dessen Abnahme pro Umdrehung, die Orientierungsmarke eindeutig erkannt und dessen Lage aus den obigen Daten errechnet werden.

Zur Verbesserung der Signalqualität die durch die Orientierungsmarken erzeugt werden, kann eine lichtempfindliche Vorrichtung **32** (**Fig. 1**) unterhalb der Substratauflage so angebracht werden, dass deren Lage bezüglich dem Substrat fix ist. Die lichtempfindliche Fläche dieser lichtempfindlichen Vorrichtung liegt bei der Messung der Randzone des Substrates annähernd in der optischen Achse der Abbildungsoptik. Der Beleuchtungsspot trifft somit beim Messen der Randzone des Substrats durch die Orientierungsmarken auf die lichtempfindliche Fläche. Substratrand und Orientierungsmarken modulieren somit das auf die lichtempfindliche Fläche treffende Licht des Beleuchtungsstrahls **1**.

Um bei verschiedenen Substratdurchmessern funktionstüchtig zu sein, muss die lichtempfindliche Fläche eine parallel zur Translationsbewegung längliche Form aufweisen, oder muss aus mehreren, für jeden Substratdurchmesser abgestimmten, Einzelelementen bestehen.

Die von der lichtempfindlichen Vorrichtung erzeugten Signale, werden in elektronische Signale umgewandelt und der oben beschriebenen Elektronik zugeführt, wo sie auf besagte Weise weiter verarbeitet werden.

## Patentansprüche

1. Einrichtung für Oberflächeninspektionen, insbesondere zur hochempfindlichen und richtungsunabhängigen Messung von punkt-, linien- und flächenförmigen Defekten einer Oberfläche, mit einer einen Beleuchtungsstrahl (**1**) erzeugenden Lichtquelle (**2**), mit einem Objektiv (**9**) und mit einer Auflagescheibe (**13**), auf der ein zu kontrollierendes bzw. zu inspizierendes Objekt (**11**) angeordnet ist, wobei der Beleuchtungsstrahl (**1**) durch das Objektiv (**9**) senkrecht auf eine zu inspizierende Oberfläche (**10**) des Objektes (**11**) gerichtet ist und die Auflagescheibe (**13**) auf einem Antrieb befestigt ist, der eine aus einer Rotation und einer Translation zusammengesetzte Bewegung ausführt, so dass die Oberfläche (**10**) des Objektes (**11**) mittels des Beleuchtungsstrahles (**1**) spiralförmig abtastbar ist, und wobei ein Photodetektor (**19**) vorgesehen ist, auf welchen das von der Oberfläche (**10**) des Objektes (**11**) abgestrahlte, im Objektiv (**9**) gesammelte Licht gerichtet ist, und dessen Ausgang mit einem Verstärker (**20**) in Verbindung steht, wobei weiter vorgesehen ist,
- dass im Strahlengang zwischen Lichtquelle (**2**) und Objektiv (**9**) ein astigmatisches Linsensystem (**5**) angeordnet ist, mittels welchem ein Zwischenbild (**31**) erzeugt wird, das durch das Objektiv auf die Oberfläche des Objekts abgebildet wird,
- dass im Strahlengang zwischen dem Linsensystem (**5**) und dem Objektiv (**9**) eine Dunkelfeldstop-Baugruppe (**18**) angeordnet ist, die eine einstellbare Dunkelfeldumlenkung (**8**) aufweist, wobei der Beleuchtungsstrahl (**1**) nach der Umlenkung exakt zentrisch und im rechten Winkel durch das Objektiv (**9**) auf das Objekt (**11**) gerichtet ist,
- dass das Objektiv (**9**), die Dunkelfeldstop-Baugruppe (**18**) und mindestens eine zwischen der Dunkelfeldstop-Baugruppe (**18**) und dem Photodetektor (**19**) angeordnete Blende (**17**) eine Abbildungsoptik bilden, die rotationssymmetrisch bezüglich ihrer optischen Achse (**34**) ist,
- dass der Verstärker (**20**) mit einer Auswerteelektronik (**21**) verbunden ist, die mit einer Recheneinheit (**22**) in Verbindung steht, und die das vom Verstärker (**20**) erzeugte Ausgangssignal in Messwerte zerlegt, die von punktförmigen, linienförmigen und flächenförmigen Defekten der Oberfläche (**10**) des kontrollierten Objektes (**11**) herrühren,
- dass eine Anordnung zur Ermittlung der jeweiligen momentanen Abtastposition vorgesehen ist, wobei die Abtastpositionen den zum jeweils gleichen Zeitpunkt auftretenden Messwerten zugeordnet sind, und
- dass mit der Recheneinheit (**22**) verbundene Peripheriegeräte (**23, 24, 25**) vorgesehen sind, mittels welchen die Gesamtheit aller Messwerte einer Messung dargestellt bzw. speicherbar ist.

2. Einrichtung nach Patentanspruch **1**,
**dadurch gekennzeichnet,**
dass das astigmatische Linsensystem (**5**) aus wenigstens einer Linse mit zwei Fokuspunkten besteht, wobei die Linse zentrisch zum Beleuchtunsstrahl (**1**) angeordnet ist und ein zigarrenförmiges Zwischenbild (**31**) erzeugt.

3. Einrichtung nach Patentanspruch **2**,
**dadurch gekennzeichnet,**
dass die Linse eine Zylinderlinse ist.

4. Einrichtung nach Patentanspruch **2**,
**dadurch gekennzeichnet,**
dass das astigmatische Linsensystem (**5**) derart im Beleuchtungsstrahl (**1**) angeordnet ist, dass das auf der Oberfläche (**10**) des Objektes (**11**) projizierte zigarrenförmige Zwischenbild (**31**) seine längere Ausdehnung bezüglich der Rotation der Auflagescheibe (**13**) in radialer, seine kürzere Ausdehnung in tangentialer Richtung aufweist, so dass bei Abtasten der Oberfläche des Objektes (**11**) ein grösserer Vorschub zwischen zwei sich folgenden Umdrehungen gewählt werden kann.

5. Einrichtung nach Patentanspruch **1**,
**dadurch gekennzeichnet,**
- dass die Dunkelfeldstop-Baugruppe (**18**) einen abgeschrägten zylindrischen Körper (**69**) für die Umlenkung des Beleuchtungsstrahles (**1**) aufweist, wobei die abgeschrägte Fläche (**69a**) verspiegelt ist und der zylindrische Körper (**69**) an einer Umlenkspiegel-Trägerplatte (**62a**) befestigt ist,
- dass die Umlenkspiegel-Trägerplatte (**62a**) zwecks Justierung ihrer Lage bezüglich der optischen Achse (**34**) über eine erste Zwischenhalterung (**64.1**) an einer ersten Haltevorrichtung (**64a**) angeordnet ist,
- dass die Dunkelfeldstop-Baugruppe (**18**) zusätzlich einen Dunkelfeldstop (**61**) aufweist, der direkt in eine Dunkelfeldstop-Trägerplatte (**62b**) integriert ist, welche über eine zweite Zwischenhalterung (**64.2**) an einer zweiten Haltevorrichtung (**64b**) zwecks Justierung ihrer Lage bezüglich der optischen Achse (**34**) angeordnet ist,
- dass der Dunkelfeldstop (**61**) durch eine kreisförmige, für die Wellenlänge des Beleuchtungsstrahles (**1**) undurchlässige Fläche gebildet ist,
- dass die Dunkelfeldstop-Trägerplatte (**62b**) bezüglich des vom Objektiv (**9**) ausgehenden Lichtkegels (**15**) hinter der Umlenkspiegel-Trägerplatte (**62a**) angeordnet ist, wobei die Grösse der Fläche des Dunkelfeldstops (**61**) so gewählt ist, dass innerhalb eines grössten Verstellbereiches (**61a**) des zylindrischen Körpers (**69**) die Abschattung des reflektierten Lichtes gewährleistet ist.

6. Einrichtung nach Patentanspruch **1**,
**dadurch gekennzeichnet,**
dass die Dunkelfeldstop-Baugruppe (**18**) einen Dunkelfeldstop (**61**) aufweist, der direkt in eine Dunkelfeldstop-Trägerplatte (**62**) integriert ist, welche an einer Haltevorrichtung (**64**) zwecks Strahljustierung drehbar gelagert ist.

7. Einrichtung nach Patentanspruch **6**,
**dadurch gekennzeichnet,**
- dass der Dunkelfeldstop (**61**) durch eine Schicht reflektierenden Materials, das im Zentrum der Dunkelfeldstop-Trägerplatte (**62**) angeordnet ist, gebildet ist,
- dass die Form der Fläche des reflektierenden Materials derart ist, dass die Projektion der Dunkelfeldstop-Baugruppe (**18**) entlang der optischen Achse (**34**) kreissymmetrisch ist, und
- dass die Dunkelfeldstop-Trägerplatte (**62**) aus einem Material besteht, das für die Wellenlängen des Beleuchtungslichtes transmittierend ist.

8. Einrichtung nach Patentanspruch **7**,
**dadurch gekennzeichnet,**
dass bei einem Neigungswinkel (**63**) der Dunkelfeldstop-Trägerplatte (**62**) von grösser als 0 , die Form der Fläche des reflektierenden Materials elliptisch ist.

9. Einrichtung nach Patentanspruch **1**,
**dadurch gekennzeichnet,**
dass die Dunkelfeldstop-Baugruppe (**18**) einen Dunkelfeldstop (**61**) in Form eines Prismas (**65**) aufweist, das in einem Prismenhalter (**66**) befestigt ist, wobei der Prismenhalter (**66**) zylinderförmig ist, so dass seine Projektion entlang der optischen Achse (**34**) der Abbildungsoptik kreissymmetrisch ist, und dass der Prismenhalter (**66**) an einer justierbar gelagerten Dunkelfeldstop-Trägerplatte (**62.1**) befestigt ist, und eine erste Oeffnung (**67**) für den Lichteintritt und eine zweite Oeffnung (**68**) für den Lichtaustritt aufweist.

10. Einrichtung nach Patentanspruch **1**,
**dadurch gekennzeichnet,**
dass die Dunkelfeldstop-Baugruppe (**18**) einen Dunkelfeldstop (**61**) in Form eines abgeschrägten, zylindrischen Körpers (**69**) aufweist, wobei die abgeschrägte Fläche verspiegelt ist und der zylindrische Körper (**69**) an einer justierbar gelagerten Dunkelfeldstop-Trägerplatte (**62.2**) befestigt ist.

11. Einrichtung nach Patentanspruch **1**,
**dadurch gekennzeichnet,**
dass eine Abschattungsvorrichtung (**60**) in Form eines in seiner Längsrichtung verschiebbaren Stabes vorgesehen ist, mittels welcher eine Asymmetrie in die Abbildung eingebracht werden kann.

12. Einrichtung nach Patentanspruch **1**,
**dadurch gekennzeichnet,**
dass zwischen der Blende (**17**) und dem Photodetektor (**19**) eine konfokale Blende (**16**) angeordnet ist, wobei der Abstand zwischen der Oberfläche (**10**) des Objektes (**11**) und der Oeffnung der konfokalen Blende (**16**) gleich dem gestreckten Abstand des Zwischenbildes (**31**) von der Oberfläche (**10**) des Objektes (**11**) ist.

13. Einrichtung nach Patentanspruch **1**,
**dadurch gekennzeichnet,**
- dass die Auswerteelektronik (**21**) einen Signaleingang (**70**) aufweist, der mit dem Ausgang des Verstärkers (**20**) und mit einem, aus einem Hazefilter (**71**) und einer Peakunterdrükkung (**72**) bestehenden Hazekanal verbunden ist,
- dass der Signaleingang (**70**) mit einem Partikelkanal verbunden ist, der aus einer Subtrahierschaltung (**73**) und einem Peakdetektor (**74**) besteht, der einen digitalen Ausgang (**79b**) aufweist,
- dass ein Hazefilterausgang (**77**) mit dem Eingang eines Analog-Digitalwandlers (**78**) in Verbindung steht, der einen Ausgang (**79a**) aufweist,
- dass das Hazefilter (**71**) mit einem Bandbreitevorgabe-Eingang (**76a**) und der Peakdetektor (**74**) mit einem weiteren Eingang (**76b**) der Auswerteelektronik (**21**) verbunden ist,
- wobei am Ausgang (**79a**) des Analog-Digitalwandlers (**78**) die von Flächendefekten (Haze) herrührenden, und am Ausgang (**79b**) des Peakdetektors (**74**) die von punktförmigen Defekten (LPD's) und linienförmigen Defekten herrührenden Messwerte auftreten, welche von der Recheneinheit (**22**) eingelesen und abgespeichert werden.

14. Einrichtung nach Patentanspruch **13**,
**dadurch gekennzeichnet,**
- dass der Hazekanal (**71, 72**) ein Tiefpassfilter (**75**) aufweist, dass aus Filterkondensatoren (**722**), Widerständen (**724**) und einer ersten und zweiten Schalteinrichtung (**725a, 725b**) besteht,
- dass die Widerstände (**724**) an den einen Enden über die erste und die zweite Schaltungseinrichtung (**725a, 725b**) mit den Filterkondensatoren (**722**) und dem Hazefilterausgang (**77**) verbunden sind,
- dass der Hazefilterausgang (**77**) über eine als Peakunterdrückung (**72**) dienende Diode (**721**) mit den anderen Enden der Widerstände (**724**) und dem Ausgang eines weiteren Verstärkers (**723**) in Verbindung steht,
- dass der Eingang des weiteren Verstärkers (**723**) mit dem Signaleingang (**70**) und mit dem nicht-invertierenden Eingang eines, als Subtrahierschaltung (**73**) dienenden dritten Verstärkers (**726**) verbunden ist,
- dass der invertierende Eingang des dritten Verstärkers (**726**) am Hazefilterausgang (**77**) angeschlossen ist, während sein Ausgang mit dem Eingang des Peakdetektors (**74**) in Verbindung steht,
- dass die Schalteinrichtungen (**725a, 725b**) zum Zwecke der Betätigung mit dem Bandbreitenvorgabe-Eingang (**76a**) verbunden sind,
- wobei mittels der Schalteinrichtungen (**725a, 725b**) in Abhängigkeit von der Rotationsgeschwindigkeit und der radialen Abtastposition vom Zentrum des zu kontrollierenden Objektes (**11**) ausgehend, die Zeitkonstante des Tiefpassfilters (**75**) durch Abschalten von Kondensatoren (**722**) und Widerständen (**724**) verkleinert wird.

15. Einrichtung nach Patentanspruch **1**,
**dadurch gekennzeichnet,**
- dass die Anordnung zur Ermittlung der Abtastpositionen einen mit der Achse eines Rotationsmotors (**27**) des Antriebes gekoppelten Rotationsimpulsgebers (**29**) und einen mit der Achse eines Translationsmotors (**28**) des Antriebs gekoppelten Translationsimpulsgeber (**30**) aufweist, die über ein Interface (**26**) mit der Recheneinheit (**22**) verbunden sind,
- dass der Rotationsimpulsgeber (**29**) eine Winkelinformation und der Translationsimpulsgeber (**30**) eine Radialinformation erzeugt, so dass die Abtastpositionen durch Polarkoordinaten bestimmbar sind,
- dass eine Liste (**96**) vorgesehen ist, welche eine Anzahl Speicherplätze aufweist, die der Anzahl aller Impulse (**92**) des Rotationsimpulsgebers (**29**) einer Messung entspricht, wobei in den Speicherplätzen Adressen gespeichert sind, durch welche x/y-Koordinaten eines kartesischen Koordinatensystems bestimmbar sind,
- dass ein Zeiger (**98**) in Form eines Adressenregisters vorgesehen ist, das jeweils bei Eintreffen eines Impulses (**92**) des Rotationsimpulsgebers (**29**) weitergeschaltet wird, so dass der Zeiger (**98**) jeweils auf die aktuelle Adresse (**97**) der Liste (**96)** zeigt, und
- dass die jeweils aktuellen Adressen (**97**) Adressen von Pixeln (**99**) sind, aus welchen sich eine das gesamte Messergebnis darstellende Pixelfläche (**93**) zusammensetzt, wobei der Ort eines Pixels (**99**) auf der Pixelfläche (**93**) dem Ort des Beleuchtungsspots (**12**) auf der Oberfläche (**10**) entspricht.

16. Einrichtung nach den Patentansprüchen **13** und **15,**
**dadurch gekennzeichnet,**
dass die Messwerte jeweils beim Auftreten der Impulse (**92**) des Rotationsimpulsgebers (**29**) eingelesen werden, und dass eine programmierbare Frequenzteilerschaltung vorgesehen ist, mittels welcher die Anzahl Impulse pro Umdrehung in Abhängigkeit von der radialen Position gegen das Zentrum hin reduziert wird.

17. Einrichtung nach den Patentansprüchen **13** und **15**,
**dadurch gekennzeichnet,**
dass die Summe aller von Fächendefekten (Haze) herrührenden Messwerte innerhalb eines Pixels (**99**) und die Anzahl dieser Messwerte des betreffenden Pixels (**99**) gespeichert werden, wobei jeweils nach Abschluss der Messwertaufnahmen für jedes Pixel (**99**) aus der Summe der Messwerte dividiert durch deren Anzahl ein Mittelwert gebildet wird.

18. Einrichtung nach den Patentansprüchen **13** und **15,**
**dadurch gekennzeichnet,**
- dass jeder von punktförmigen Defekten (LPD's) herrührende Messwert vor der Speicherung mit einem Messwert verglichen wird, der für das betreffende Pixel (**99**) bereits gespeichert wurde,
- dass der neue Messwert anstelle des bereits gespeicherten Messwertes gespeichert wird, wenn er grösser als der bereits gespeicherte Messwert ist, und
- dass der neue Messwert verworfen wird, wenn er kleiner als der bereits gespeicherte Messwert ist.

19. Einrichtung nach Patentanspruch **1**,
**dadurch gekennzeichnet,**
dass die Oberfläche (10) vom Zentrum ausgehend in Richtung Objektrand abgetastet wird.

20. Einrichtung nach Patentanspruch **13,**
**dadurch gekennzeichnet,**
dass eine Anordnung für die automatische Einstellung der Messempfindlichkeit vorgesehen ist, wobei während der Rotation des Objektes (11) die Messempfindlichkeit beginnend mit einem geringsten Wert schrittweise gesteigert wird und die Messwerte nach jedem Schritt aufgenommen und gemittelt werden, und wobei die Steigerung der Messempfindlichkeit solange wiederholt wird, bis die gemittelten Messwerte einem vorgegebenen Wert entsprechen.

21. Einrichtung nach Patentanspruch **15,**
**dadurch gekennzeichnet,**
dass die Darstellung der Messwerte als farbkodierte, zweidimensionale Graphik erfolgt, wobei zwischen einer Hazegraphik (**45**) und einer LPD-Graphik (**46**) gewählt werden kann.

22. Einrichtung nach Patentanspruch **21,**
**dadurch gekennzeichnet,**
dass bestimmten, den Messwerten entsprechenden Streulichtamplituden bestimmte Farben zugeordnet sind.

23. Einrichtung nach Patentanspruch **22,**
**dadurch gekennzeichnet,**
dass jeweils ein wählbarer Ausschnitt (**43**) des Dynamikbereiches der Messwerte farbig dargestellt wird und die Zuordnung der Farben in diesem Ausschnitt wirksam ist.

24. Einrichtung nach Patentanspruch **23**,
**dadurch gekennzeichnet,**
dass der wählbare Ausschnitt (**43**) durch automatisches Setzen einer unteren und einer oberen Limite (**40, 41**) bestimmt ist, die aus den von Flächendefekten (**Haze**) herrührenden Messwerten errechnet werden, wobei durch Mittelwert- und Streuwertbildung der Messwerte die untere und die obere Limite (**40, 41**) durch Verschiebung und Skalierung so gesetzt werden, dass ein bestimmter Anteil der Messwerte in den dargestellten Ausschnitt (**43**) fällt.

25. Einrichtung nach Patentanspruch **21**,
**dadurch gekennzeichnet,**
dass die Farbskala für die LPD-Graphik (46) der invertierten Farbskala der Hazegraphik (45) entspricht.

26. Einrichtung nach Patentanspruch **21**,
**dadurch gekennzeichnet**,
dass die jeweils einer Farbe zugeordneten Messwerte (**47a, 48a, 47b, 48b**) zusätzlich numerisch anzeigbar sind.

27. Einrichtung nach Patentanspruch **1**,
**dadurch gekennzeichnet,**
dass die Anzahl der Defekte einer Oberfläche (**10**) in Beziehung zur Auswahl mittels eines Histogramms darstellbar sind.

28. Einrichtung nach Patentanspruch **1**,
**dadurch gekennzeichnet,**
dass unterhalb der Substratauflage eine bezüglich dem Substrat fixe lichtempfindliche Vorrichtung (**32**) vorgesehen ist, deren lichtempfindliche Fläche bei der Messung der Randzonen des Substrates (**10**) annähernd in der optischen Achse der Abbildungsoptik liegt.

## Claims

1. A surface inspection apparatus, in particular for a highly sensitive and direction-independent measurement of dot-shaped, linear and planiform defects of a surface,
comprising a light source (2) producing an illuminating beam (1), an objective (9), and a supporting disk (13) having arranged thereon an object (11) to be inspected and examined, respectively, wherein said illuminating beam (1) is perpendicularly directed through said objective (9) onto a surface (10) to be inspected of said object (11), and said supporting disk (13) is mounted on a drive performing a movement composed of a rotation and a translation, such that the surface (10) of said object (11) can spirally be scanned by means of said illuminating beam (1), and wherein a photodetector (19) is provided onto which the light reflected from said surface (10) of said object (11) and collected in said objective (9) is directed and the output of which is connected to an amplifier (20),
wherein it is further provided that
- an astigmatic lens system (5) is positioned on the optical path between the light source (2) and the objective (9), by means of which system an intermediate image (31) is generated, which is mapped through said objective onto the surface of the object,
- a dark-field stop assembly (18) is positioned in the optical path between said lens system (5) and said objective (9), said dark-field stop assembly (18) having an adjustable dark-field deflection system (8), wherein said illuminating beam (1) after deflection is directed exactly centred and at right angles through the objective (9) onto said object (11),
- said objective (9), said dark-field stop assembly (18) and at least one diaphragm (17) placed between said dark-field stop assembly (18) and said photodetector (19) make up image-forming optics which are rotationally symmetrical in relation to the optical axis (34) thereof,
- said amplifier (20) is connected to an electronic analysis means (21) coupled to a computing unit (22) and breaking down the output signal from said amplifier (20) into measured values produced by dot-shaped, linear and planiform defects in the surface (10) of the object (11) under inspection,
- there is provided a means for determining the respective current scanning position, said scanning positions being associated to the measured values respectively appearing at the same moment, and
- there are provided peripherals (23, 24, 25) connected to said computing unit (22), by means of which the totality of all measured values of a measurement is represented or storable, respectively.

2. The apparatus of claim 1, characterized in that said astigmatic lens system (5) is composed of at least one lens having two focal points, the lens being concentrically arranged with respect to said illuminating beam (1) and producing a cigar-shaped intermediate image (31).

3. The apparatus of claim 2, characterized in that the lens is a cylindrical lens.

4. The apparatus of claim 2, characterized in that said astigmatic lens system (5) is so placed in said illuminating beam (1) that the cigar-shaped intermediate image (31) projected on the surface (10) of said object (11) has its larger extension in a radial direction relative to the rotation of said supporting disk (13) and its smaller extension in a tangential direction, such that for a scan of the surface of said object (11), a larger feed may be selected between two successive revolutions.

5. The apparatus of claim 1, characterized in that
- said dark-field stop assembly (18) includes a beveled cylindrical body (69) for deflecting said illuminating beam (1), with the beveled surface (69a) being silvered and said cylindrical body (69) being secured to a deflection-mirror carrier plate (62a),
- said deflection-mirror carrier plate (62a) is secured to a first mount (64a) via a first intermediate mount (64.1) for the purpose of adjustment of its position relative to said optical axis (34),
- said dark-field stop assembly (18) additionally comprises a dark-field stop (61) directly integrated in a dark-field stop carrier plate (62b) which is secured to a second mount (64b) via a second intermediate mount (64.2) for the purpose of adjustment of its position relative to said optical axis (34),
- said dark-field stop (61) is formed by a circular surface opaque to the wavelength of said illuminating beam (1),
- said dark-field stop carrier plate (62b) is placed behind said deflection-mirror carrier plate (62a) with respect to the light cone (15) from said objective (9), the size of the surface of said dark-field stop (61) being so chosen as to ensure vignetting of the light reflected throughout a maximum adjustment range (61a) of said cylindrical body (69).

6. The apparatus of claim 1, characterized in that said dark-field stop assembly (18) has a dark-field stop (61) directly integrated in a dark-field stop carrier plate (62) which is pivotally mounted at a holding device (64) for the purpose of beam adjustment.

7. The apparatus of claim 6, characterized in that
- said dark-field stop (61) is formed by a coating of reflecting material placed in the centre of said dark-field stop carrier plate (62),
- the shape of the area of reflecting material is such that the projection of said dark-field stop assembly (18) along the optical axis (34) is circularly symmetrical, and
- said dark-field stop carrier plate (62) is made of a material that is transparent to the wavelengths of the illuminating light.

8. The apparatus of claim 7, characterized in that the shape of the area of reflecting material is elliptical for any angle of inclination (63) of said dark-field stop carrier plate (62) greater than 0.

9. The apparatus of claim 1, characterized in that said dark-field stop assembly (18) has a dark-field stop (61) in the form of a prism (65) fixed to a prism mount (66), said prism mount (66) being cylindrical in shape, such that its projection along the optical axis (34) of the image-forming optics is circularly symmetrical, and that said prism mount (66) is fixed to an adjustably supported dark-field stop carrier plate (62.1) and has a first opening (67) for the entry and a second opening (68) for the exit of the light.

10. The apparatus of claim 1, characterized in that said dark-field stop assembly (18) has a dark-field stop (61) in the form of a beveled cylindrical body (69), with the beveled surface being silvered and said cylindrical body (69) being fixed to an adjustably supported dark-field stop carrier plate (62.2).

11. The apparatus of claim 1, characterized in that a vignetting device (60) is provided in the form of a longitudinally displaceable rod, by means of which an asymmetry can be introduced into the image.

12. The apparatus of claim 1, characterized in that a confocal diaphragm (16) is located between said diaphragm (17) and said photodetector (19), the distance from the surface (10) of said object (11) to the aperture of said confocal diaphragm (16) being equal to the stretched distance from said intermediate image (31) to the surface (10) of said object (11).

13. The apparatus of claim 1, characterized in that
- said electronic analysis means (21) has a signal input (70) connected with the output of said amplifier (20) and to a haze channel consisting of a haze filter (71) and a peak suppressor (72),
- said signal input (70) is connected to a particle channel consisting of a subtraction circuit (73) and a peak detector (74) having a digital output (79b),
- a haze filter output (77) is connected to the input of an analog-digital converter (78) having an output (79a),
- said haze filter (71) is connected to a nominal-bandwidth input (76a) and said peak detector (74) is connected to a further input (76b) of said electronic analysis means (21),
- wherein measurements due to planiform defects (haze) occur at the output (79a) of said analog-digital converter (78), and measurements due to dot-shaped defects (LPDs) and linear defects occur at the output (79b) of said peak detector (74), and all these measurements are read and stored by said computing unit (22).

14. The apparatus of claim 13, characterized in that
- said haze channel (71, 72) has a low-pass filter (75) which consists of filter condensers (722), resistors (724), and first and second switch systems (725a, 725b),
- said resistors (724) are connected at one end to said filter condensers (722) and said haze filter output (77) via said first and second switch systems (725a, 725b),
- said haze filter output (77) is connected to the other ends of said resistors (724) and to the output of a further amplifier (723) via a diode (721) acting as a peak suppressor (72),
- the input of said further amplifier (723) is connected to said signal input (70) and to the non-inverting input of a third amplifier (726) serving as a subtraction circuit (73),
- the inverting input of said third amplifier (726) is connected to said haze filter output (77), while its output is connected to the input of said peak detector (74),
- said switch systems (725a, 725b) are connected to said nominal-bandwidth input for the purpose of actuation thereof,
- said switch systems (725a, 725b) switch off condensers (722) and resistors (724) to reduce the time constant of said low-pass filter (75) in proportion to the speed of rotation and the radial scanning position from the centre of said object (11) under inspection.

15. The apparatus of claim 1, characterized in that
- said assembly for detecting the scanning positions includes a rotation-pulse emitter (29) coupled to the shaft of a rotary motor (27) of the drive, and a translation-pulse emitter (30) coupled to the shaft of a translation motor (28) of the drive, connected to said computing unit (22) by means of an interface (26),
- said rotation-pulse emitter (29) generates an angle information and said translation-pulse emitter (30) generates a radial information, such that the scanning positions can be determined by polar coordinates,
- there is provided a table (96) comprising a number of storage positions corresponding to the number of all pulses (92) of said rotation-pulse emitter (29) during a measurement, wherein addresses are stored in said storage positions to permit determination of the XY coordinates in a Cartesian coordinate system,
- there is provided a pointer (98) in the form of an address register being incremented whenever a pulse (92) of said rotation-pulse emitter (29) is received, such that said pointer (98) at all times points to the current address (97) of said table (96), and
- said respective current addresses (97) are addresses of pixels (99) which make up a pixel area (93) representing the result of all measurements, wherein the location of each pixel (99) in said pixel area (93) corresponds to the location of the illuminating spot (12) on said surface (10).

16. The apparatus of claims 13 and 15, characterized in that the measured values are read whenever said pulses (92) of said rotation-pulse emitter (29) occur and that there is provided a programmable frequency divider circuit, by means of which the number of pulses per revolution is reduced in relation to the radial position towards the centre.

17. The apparatus of claims 13 and 15, characterized in that the total of all measured values due to planiform defects (haze) within a pixel (99) and the number of these measurements of said pixel (99) are stored, computing a mean value for each pixel (99) on completion of data acquisition of the measurements by dividing the sum of all measured values by the number thereof.

18. The apparatus of claims 13 and 15, characterized in that
- prior to its storage, each measured value obtained from dot-shaped defects (LPDs) is compared with a measured value previously stored for said pixel (99),
- the new measurement is stored instead of the measured value previously stored, if it is greater than the measured value previously stored, and
- the new measurement is discarded, if it is smaller than the measured value previously stored.

19. The apparatus of claim 1, characterized in that said surface (10) is scanned from the centre towards the edge of the object.

20. The apparatus of claim 13, characterized in that means is provided for automatically adjusting measuring sensitivity, the measuring sensitivity being increased gradually during the rotation of said object (11), starting with a lowest value, and recording the measured values and computing their mean values after each step, and continuing the increase of the measuring sensitivity until the mean values correspond to a predetermined value.

21. The apparatus of claim 15, characterized in that the measured values are displayed as a colour-coded two-dimensional chart, offering the choice between a haze graph (45) and an LPD graph (46).

22. The apparatus of claim 21, characterized in that specific colours are assigned to various diffused-light amplitudes corresponding to the measured values.

23. The apparatus of claim 22, characterized in that a selectable window (43) of the dynamic range of the measurements is respectively represented in colour, and that the assignment of the colours is effective in that window.

24. The apparatus of claim 23, characterized in that said selectable window (43) is determined by automatically setting lower and upper limits (40, 41) computed from the measured values obtained from the planiform defects (haze), said lower and upper limits (40, 41) being set by the computation of mean values and erratic values from the measurements of deviation, and displacement and scaling so as to place a given portion of the measured values in the window (43) shown.

25. The apparatus of claim 21, characterized in that the colour scale for the LPD graphs (46) is an inverted colour scale for the haze graphs (45).

26. The apparatus of claim 21, characterized in that the measured values (47a, 48a, 48a, 48b) assigned to each colour can also be shown numerically.

27. The apparatus of claim 1, characterized in that the number of defects in a surface (10) can be displayed in correlation to the selection by means of a histogram.

28. The apparatus of claim 1, characterized in that under the substrate coating a photosensitive device (32) is provided, which is fixed with respect to the substrate and whose photosensitive surface is approximately located in the optical axis of the image-forming optics when the edge zones of said substrate (10) are being measured.

## Revendications

1. Dispositif de contrôle de surfaces, notamment de mesure très sensible et indépendante de la direction des défauts en forme de points, de lignes et de surfaces dans une surface, comprenant une source de lumière (2) qui engendre un rayon d'éclairage (1), comprenant un objectif (9) et un disque d'appui (13) sur lequel est disposé un objet (11) qu'il s'agit de contrôler ou d'inspecter, respectivement, le rayon d'éclairage (1) étant dirigé à travers l'objectif (9) sur une surface à contrôler (10) de l'objet (11) et perpendiculairement à celle-ci, et le disque d'appui (13) étant fixé sur un entraînement qui effectue un déplacement composé d'une rotation et d'une translation, de sorte que la surface (10) de l'objet (11) peut être explorée en forme de spirale au moyen du rayon d'éclairage (1), et un détecteur photo-électrique (19) étant prévu sur lequel est dirigée la lumière rayonnée par la surface (10) de l'objet (11) et concentrée dans l'objectif (9), sa sortie étant en liaison avec un amplificateur, où il est en outre prévu :
- qu'un système de lentilles astigmate (5) est placé dans le trajet des rayons entre la source de lumière (2) et l'objectif (9), au moyen duquel est créée une image intermédiaire (31) formée sur la surface de l'objet à travers l'objectif,
- que dans le trajet des rayons entre le système de lentilles (5) et l'objectif (9) est disposé un bloc à arrêt à zone sombre (18) comportant une déviation réglable sur la zone sombre (8), le rayon d'éclairage (1) étant dirigé sur l'objet (11) à travers l'objectif (9) à angle droit et d'une manière exactement centrée après la déviation,
- que l'objectif (9), le bloc à arrêt à zone sombre (18) et au moins un diaphragme (17) placé entre le bloc à arrêt à zone sombre (18) et le détecteur photo-électrique (19), forment une optique de reproduction dont la rotation est symétrique par rapport à son axe optique (34),
- que l'amplificateur (20) est relié à une électronique d'exploitation (21) en liaison avec une unité de calcul (22) et décomposant le signal de sortie engendré par l'amplificateur (20) en des valeurs de mesure provenant de défauts en forme de points, de lignes et de surfaces de la surface (10) de l'objet contrôlé (11),
- qu'il est prévu un dispositif pour la détermination de chaque position d'exploration instantanée, les positions d'exploration étant associées aux valeurs de mesure intervenant toujours au même moment, et
- qu'il est prévu des appareils périphériques (23, 24, 25) reliés à l'unité ae calcul (22) et au moyen desquels l'ensemble de toutes les valeurs de mesure d'une mesure peut être respectivement représenté ou enregistré.

2. Dispositif selon la revendication 1, **caractérisé en ce que** le système de lentilles (5) astigmate est composé d'au moins une lentille à double point de focalisation, la lentille étant placée de façon centrée par rapport au rayon d'éclairage (1) et créant une image intermédiaire (31) en forme de cigare.

3. Dispositif selon la revendication 2, **caractérisé en ce que** la lentille est une lentille cylindrique.

4. Dispositif selon la revendication 2, **caractérisé en ce que** le système de lentilles (5) astigmate est placé dans le rayon d'éclairage (1) de telle sorte que l'image intermédiaire (31) en forme de cigare projetée sur la surface de l'objet (11) est le plus étirée en direction radiale par rapport à la rotation du disque d'appui (13) et le moins étirée en direction tangentielle, de sorte que l'on peut choisir lors de l'exploration de la surface de l'objet (11) une avance plus grande entre deux révolutions consécutives.

5. Dispositif selon la revendication 1, **caractérisé en ce**
- **que** le bloc à arrêt à zone sombre (18) présente un corps cylindrique biseauté (69) pour la déflexion du rayon d'éclairage (1), la surface biseautée (69a) étant revêtue d'une couche réfléchissante et le corps cylindrique (69) étant fixé à une plaque porteuse du miroir déflecteur (62a),
- que la plaque porteuse du miroir déflecteur (62a) est placée sur un premier dispositif formant support (64a) à l'aide d'une premier arrêt intermédiaire (64.1) en vue du réglage de sa position par rapport à l'axe optique (34),
- que le bloc à arrêt à zone sombre (18) présente en outre un arrêt à zone sombre (61) intégré directement à une plaque porteuse de l'arrêt à zone sombre (62b), celle-ci étant placée à l'aide d'un second arrêt intermédiaire (64.2) sur un second dispositif formant support (64b) en vue du réglage de sa position par rapport à l'axe optique (34),
- que l'arrêt à zone sombre (61) est formé par une surface circulaire imperméable à la longueur d'onde du rayon d'éclairage (1),
- que la plaque porteuse de l'arrêt à zone sombre (62b) est placée derrière la plaque porteuse du miroir déflecteur (62a) par rapport au cône de lumière (15) sortant de l'objectif (9) la taille de la surface de l'arrêt à zone sombre (61) étant sélectionnée de manière à garantir l'obscurcissement de la lumière réfléchie à l'intérieur d'une plus grande plage de réglage (61a) du corps cylindrique (69).

6. Dispositif selon la revendication 1, **caractérisé en ce que** le bloc à arrêt à zone sombre (18) comporte un arrêt à zone sombre (61) intégré directement à une plaque porteuse de l'arrêt à zone sombre (62), celle-ci étant montée de manière tournante sur un dispositif formant support (64) en vue du réglage du rayon.

7. Dispositif selon la revendication 6, **caractérisé en ce**
- **que** l'arrêt à zone sombre (61) est constitué par une couche de matière réfléchissante disposée au centre de la plaque porteuse de l'arrêt à zone sombre (62),
- que la forme de la surface de la matière réfléchissante est telle que la projection du bloc à arrêt à zone sombre (18) selon l'axe optique (34) est symétrique de révolution, et
- que la plaque porteuse de l'arrêt à zone sombre (62) est constituée par une matière transmettant la lumière pour les longueurs d'onde de la lumière d'éclairage.

8. Dispositif selon la revendication 7, **caractérisé en ce que** la forme de la surface de la matière réfléchissante est elliptique dans le cas d'un angle d'inclinaison (63) de la plaque porteuse de l'arrêt à zone sombre (62) supérieur à 0.

9. Dispositif selon la revendication 1, **caractérisé en ce que** le bloc à arrêt à zone sombre (18) présente un arrêt à zone sombre (61) sous la forme d'un prisme (65) fixé dans un porte-prisme (66), celui-ci étant en forme de cylindre, de sorte que sa projection selon l'axe optique (34) de l'optique de formation de l'image est symétrique de révolution, **et en ce que** le porte-prisme (66) est fixé à une plaque porteuse de l'arrêt à zone sombre (62.1) montée de manière réglable, et qu'il présente une première ouverture (67) pour l'entrée de la lumière et une deuxième ouverture (68) pour la sortie de la lumière.

10. Dispositif selon la revendication 1, **caractérisé en ce que** le bloc à arrêt à zone sombre (18) présente un arrêt à zone sombre (61) sous la forme d'un corps cylindrique biseauté (69), la surface biseautée étant revêtue d'une couche réfléchissante, et le corps cylindrique (69) étant fixé à une plaque porteuse de l'arrêt à zone sombre (62.2) montée de manière réglable.

11. Dispositif selon la revendication 1, **caractérisé en ce qu**'il est prévu un dispositif d'obscurcissement (60) sous la forme d'une tige pouvant être déplacée dans sa direction longitudinale et au moyen de laquelle une asymétrie peut être introduite dans l'image formée.

12. Dispositif selon la revendication 1, **caractérisé en ce qu**'un diaphragme (16) à foyer commun est placé entre le diaphragme (17) et le photo-détecteur (19), l'écart séparant la surface (10) de l'objet (11) et l'orifice du diaphragme à foyer commun (16) étant identique à la distance linéaire de l'image intermédiaire (31) de la surface (10) de l'objet (11).

13. Dispositif selon la revendication 1, **caractérisé en ce**
- **que** l'électronique d'exploitation (21) présente une entrée des signaux (70) reliée à la sortie de l'amplificateur (20) et à un canal à défauts en forme de surfaces constitué par un filtre à défauts en forme de surfaces (71) et par un dispositif de suppression des pointes (72),
- que l'entrée des signaux (70) est reliée à un canal à particules constitué par un circuit soustractif (73) et par un détecteur de pointes (74) qui comporte une sortie numérique (79b),
- qu'une sortie (77) du filtre à défauts en forme de surfaces est reliée à l'entrée d'un convertisseur analogique-numérique (78) présentant une sortie (79a),
- que le filtre à défauts en forme de surfaces (71) est relié à une entrée de prédétermination de la largeur de la bande (76a), et que le détecteur de pointes (74) est relié à une autre entrée (76b) de l'électronique d'exploitation (21),
- des valeurs de mesure provenant de défauts en forme de surfaces étant obtenues à la sortie (79a) du convertisseur analogique-numérique (78), et des valeurs de mesure provenant de défauts en forme de points et en formes de lignes à la sortie (79b) du détecteur de pointes (74), ces valeurs étant lues et enregistrées par l'unité de calcul (22).

14. Dispositif selon la revendication 13, **caractérisé en ce**
- **que** le canal à défauts en forme de surfaces (71, 72) comporte un filtre passe-bas (75) constitué par des condensateurs de filtrage (722), des résistances (724) et un premier et un deuxième dispositifs de commutation (725a, 725b),
- que les résistances (724) sont reliées à l'une de leurs extrémités et par l'intermédiaire des premier et deuxième dispositifs de commutation (725a, 725b), aux condensateurs de filtrage (722) et à la sortie (77) du filtre à défauts en forme de surfaces,
- que la sortie (77) du filtre à défauts en forme de surfaces est reliée, par l'intermédiaire d'une diode (721) servant de dispositif de suppression des pointes (72), aux autres extrémités des résistances (724) et à la sortie d'un autre amplificateur (723),
- que l'entrée de l'autre amplificateur (723) est reliée à l'entrée des signaux (70) et à l'entrée non inversante d'un troisième amplificateur (726) servant de circuit soustractif (73),
- que l'entrée inversante du troisième amplificateur (726) est raccordée à la sortie (77) du filtre à défauts en forme de surfaces, sa sortie étant en liaison avec l'entrée du détecteur de pointes (74),
- que les dispositifs de commutation (725a, 725b) sont reliés à l'entrée de prédétermination de la largeur de bande (76a) en vue de l'actionnement,
- la constante de temps du filtre passe-bas (75) étant diminuée par mise hors circuit de condensateurs (722) et de résistances (724) au moyen des dispositifs de commutation (725a, 725b), en fonction de la vitesse de rotation et en partant de la position d'exploration dans le sens radial par rapport au centre de l'objet à contrôler (11).

15. Dispositif selon la revendication 1, **caractérisé en ce**
- **que** le dispositif destiné à déterminer les positions d'exploration comprend un émetteur d'impulsions de rotation (29) couplé à l'axe d'un moteur de rotation (27) de l'entraînement et un émetteur d'impulsions de translation (30) couplé à l'axe d'un moteur de translation (28) de l'entraînement, ces émetteurs étant reliés à l'unité de calcul (22) par l'intermédiaire d'un interface (26),
- que l'émetteur d'impulsions de rotation (29) engendre une information angulaire et que l'émetteur d'impulsions de translation (30) engendre une information radiale, de sorte que les positions d'exploration peuvent être déterminées en coordonnées polaires,
- qu'il est prévu une liste (96) comportant une pluralité de places de mémoire correspondant au nombre de toutes les impulsions (92) de l'émetteur d'impulsions de rotation (29) d'une mesure, des adresses étant enregistrées dans les places de mémoire, adresses au moyen desquelles on peut déterminer les coordonnées en x et en y d'un système de coordonnées cartésiennes,
- qu'il est prévu un indicateur (98) sous la forme d'un registre d'adresses continuant à être commuté lors de l'arrivée d'une impulsion (92) de l'émetteur d'impulsions de rotation (29), de sorte que l'indicateur (98) indique à chaque fois l'adresse actuelle (97) de la liste (96), et
- que les adresses qui sont à chaque fois actuelles (97) sont des adresses de pixels (99) à partir desquelles est composée la surface de pixels (93) représentant la totalité du résultat des mesures, l'endroit d'un pixel (99) sur la surface de pixels (93) correspondant à l'endroit de la tache de lumière (12) sur la surface (10).

16. Dispositif selon les revendications 13 et 15, **caractérisé en ce que** les valeurs de mesure sont lues à chaque fois lors de l'apparition des impulsions (92) de l'émetteur d'impulsions de rotation (29), et en ce qu'il est prévu un circuit diviseur de fréquences programmable au moyen duquel le nombre d'impulsions par révolution est réduit en fonction de la position dans le sens radial par rapport au centre.

17. Dispositif selon les revendications 13 et 15, **caractérisé en ce que** la somme de toutes les valeurs de mesure provenant des défauts de surface (défauts) à l'intérieur d'un pixel (99) et le nombre de ces valeurs de mesure des pixels concernés (99) sont mis en mémoire, étant entendu qu'à l'issue de chaque prise de mesures pour chaque pixel (99), une moyenne (valeur moyenne) est obtenue par division de la somme des valeurs de mesures par le nombre de mesures effectuées.

18. Dispositif selon les revendications 13 et 15, **caractérisé en ce**
- **que** chaque valeur de mesure provenant de défauts en formes de points est comparée, avant la mise en mémoire, à une valeur de mesure déjà mise en mémoire pour le pixel concerné (99),
- que la nouvelle valeur de mesure est mise en mémoire à la place de la valeur de mesure déjà mémorisée pour autant que cette nouvelle valeur soit supérieure à la valeur de mesure déjà mise en mémoire, et
- que la nouvelle valeur de mesure est rejetée si elle est inférieure à la valeur de mesure déjà mise en mémoire.

19. Dispositif selon la revendication 1, **caractérisé en ce que** la surface (10) est explorée dans la direction du bord de l'objet en partant du centre.

20. Dispositif selon la revendication 13, **caractérisé en ce qu'**il est prévu un dispositif pour le réglage automatique de la sensibilité de mesurage, celle-ci étant augmentée par étapes pendant la rotation de l'objet (11) en commençant par une valeur minime, les valeurs de mesure étant relevées après chaque étape et la moyenne en étant calculée, l'augmentation de la sensibilité de mesurage étant répétée jusqu'à ce que les valeurs de mesure moyennes correspondent à une valeur prédéfinie.

21. Dispositif selon la revendication 15, **caractérisé en ce que** la représentation des valeurs de mesure est réalisée sous la forme d'un graphique à deux dimensions à codage par des couleurs, cependant qu'il est possible de choisir entre un graphique des défauts en forme de surfaces (45) et un graphique des défauts en forme de points (46).

22. Dispositif selon la revendication 21, **caractérisé en ce que** des couleurs déterminées sont associées à des amplitudes de la lumière dispersée qui sont déterminées et qui correspondent aux valeurs de mesure.

23. Dispositif selon la revendication 22, **caractérisé en ce qu'**une section (43) de la zone dynamique des valeurs de mesure que l'on peut choisir est représentée à chaque fois en couleurs, et que l'association des couleurs est active dans cette section.

24. Dispositif selon la revendication 23, **caractérisé en ce que** la section (43) pouvant être sélectionnée est définie par fixation automatique d'une limite inférieure et d'une limite supérieure (40, 41) calculées à partir des valeurs de mesure provenant des défauts de surface (défauts), les limites inférieure et supérieure (40, 41) étant fixées par la détermination de la valeur moyenne et de la valeur de diffusion des valeurs de mesure par décalage et augmentation de telle sorte qu'une certaine partie des valeurs de mesure se trouve dans la section représentée (43).

25. Dispositif selon la revendication 21, **caractérisé en ce que** l'échelle des couleurs destinée au graphique des défauts en forme de points (46) correspond à l'inverse de l'échelle des couleurs du graphique des défauts en forme de surfaces (45).

26. Dispositif selon la revendication 21, **caractérisé en ce que** les valeurs de mesure (47a, 48a, 47b, 48b) associées à chaque fois à une couleur peuvent en outre être affichées par voie numérique

27. Dispositif selon la revendication 1, **caractérisé en ce que** le nombre des défauts d'une surface (10) peut être représenté au moyen d'un histogramme en relation avec leur nombre.

28. Dispositif selon la revendication 1, **caractérisé en ce qu'**il est prévu sous la couche de substrat un dispositif photosensible (32) fixe par rapport au substrat, dispositif dont la surface photosensible est presque située dans l'axe optique de l'optique de reproduction lors du mesurage des zones périphériques du substrat (10).
